# EUROPEAN PATENT SPECIFICATION

(11) **EP 1 261 063 B1**
(45) Date of publication and mention of the grant of the patent: **20.08.2008**
(21) Application number: 02253610.6
(22) Date of filing: 22.05.2002
(51) Int. Cl.: H01M 10/04

(54) **Automated manufacturing system for manufacturing a secondary lithium battery**
Automatisches Herstellungssystem zum Herstellen von Lithiumsekundärbatterie
Système de fabrication automatisé pour fabriquer des piles rechargeables au lithium

(30) Priority: 23.05.2001 KR 2001025493
(43) Date of publication of application: 27.11.2002
(73) Proprietor: Kokam Co., Ltd., Kyounggi-do 429-450 (KR)
(72) Inventor: Hong, Ji-Jun, Chungcgeongnam-do 320-844 (KR)
(74) Representative: Church, Simon John

(56) References cited:
- EP-A- 0 959 513
- KR-A- 20010 000 061
- US-A1- 2001 049 872

## Description

The present invention relates to an automated manufacturing system for manufacturing a lithium secondary battery.

In general, as portable electronic products such as video cameras, portable phones, and portable PCs become lighter, or highly functional, various development and research has been focussed on batteries used as power sources of such portable electronic products. Such batteries can be used continuously by recharging the batteries.

Among various batteries, usually, nickel cadmium batteries, nickel hydrogen batteries, nickel zinc batteries, lithium secondary batteries and the like are used as power sources of electronic products, and, in particular, lithium secondarybatteries are generally used taking into consideration the use life and capacity thereof.

According to types of electrolyte, the lithium secondary batteries are classified into lithium metal batteries and lithium ion batteries which employ liquid electrolyte, and lithium polymer batteries which employ solid polymer electrolyte. According to types of solid polymer electrolyte, the lithium polymer batteries are classified into full-solid type lithium polymer batteries in which organic electrolytic liquid is not included at all, and lithium ion polymer batteries employing gel type polymer electrolyte containing organic electrolytic liquid.

The lithium secondary battery is manufactured by stacking a plurality of unit cells having a separator-electrode structure so as to meet a required capacity, connecting the unit cells to each other in parallel, and packing the unit cells into a cylindrical or polyhedral can.

However, in a battery in which electrode plates are disposed according to a conventional method, there is a problem in which when the battery is overcharged, a voltage of the battery rises drastically, and the energy of the battery may be instantaneously discharged and the electrolyte may evaporate or burn, and therefore the performance ofthe battery and safety thereof deteriorate. In addition, there is another problem in which the process of attaching electrode taps for electrically connecting unit cells to each other is very complicated.

To solve the above-described problems, it is an objective of the present invention to provide an automated manufacturing system for a secondary battery having an improved structure and which system is capable of making manufacturing processes simple, and enhancing efficiency of assembling.

Accordingly, to achieve the above objectives, there is provided an automated manufacturing system of a secondary lithium battery comprising: a frame; a supply unit having a separator roller installed at the frame to be rotatable so that a separator can be released from the separator roller, and can travel along a separator travel path; an adhesive applying unit disposed to have the separator travel path through the adhesive applying unit so as to continuously apply adhesive to both surfaces of the separator in a predetermined pattern; a lamination unit installed at the frame for laminating one adhesive applied surface of the separator with a plurality of positive electrode plates, and the other adhesive applied surface of the separator with a plurality of negative electrode plates simultaneously so that the electrode plates can correspond to the above pattern; a transporting unit installed at the frame to be rotatable while contacting the separator so as to periodically cause the separator supplied from the supply unit to travel along the travel path at a predetermined speed via the adhesive applying unit and the lamination unit; a packing unit installed at the frame for folding and packing a batch of the separator which is laminated with the electrode plates by the lamination unit in a predetermined pattern and is transported by the transporting unit so that the positive electrode plates and the negative electrode plates can alternate with each other, and both side sections of the folded separator can have the shape of "Z"; and an unloading unit installed at the frame to be movable for unloading the packed separator to a tray unit.

It is preferable that the travel path between the supply unit and the packing unit is arranged to be horizontal with respect to a floor.

Preferably, in the automated manufacturing system of a secondary lithium battery, the supply unit comprises: a plurality of guide rollers installed at the frame to be positioned along the travel path; and a dancing roller installed at a dancing arm installed at the frame to be pivotable for storing a predetermined length of separator released from the separator roller, and for supplying the separator to the adhesive applying unit while controlling the tension of the separator.

Preferably, in the automated manufacturing system of a secondary lithium battery, the supply unit further comprises a stopper member installed to be close to the supply unit for selectively stopping the separator travelling continuously.

Preferably, in the automated manufacturing system of a secondary lithium battery, the adhesive applying unit comprises a pair of air injectors installed at the frame so that the distance between the injectors and the travel path can be adjusted, and the injectors can face each other.

Preferably, in the automated manufacturing system of a secondary lithium battery, each air injector comprises a plurality of nozzles capable of injecting adhesive with compressed air so that a unit adhesive applied portion having a doughnut shape can be formed on a surface of the separator.

Preferably, in the automated manufacturing system of a secondary lithium battery, the adhesive applying unit further comprises adhesive drying members installed to be close to the separator for drying the adhesive injected on both surfaces of the separator by the adhesive applying unit.

Preferably, in the automated manufacturing system of a secondary lithium battery, the adhesive applying unit further comprises a first position adjusting member installed between the frame and the adhesive applying unit for adjusting the position of the adhesive applying unit with respect to the frame.

Preferably, in the automated manufacturing system of a secondary lithium battery, the system further comprises a travel guide member installed at the frame to be position between the adhesive applying unit and the lamination unit for guiding the separator travelling along the travel path.

Preferably, in the automated manufacturing system of a secondary lithium battery, the lamination unit comprises: a stacking member provided with a plurality of positive-electrode-plate storing portions each of which a multitude of positive electrode plates are stored in, and which are disposed equidistantly, and a plurality of negative-electrode-plate storing portions each of which a multitude of negative electrode plates are stored in, and which are disposed equidistantly, and are installed at the frame to be asymmetrical to the positive-electrode-plate storing portions about the separator to which adhesive has been applied to in a predetermined pattern; pairs of pivoting members installed at the frame to pivot so as to face the positive-electrode-plate storing portions and the negative-electrode-plate storing portions, respectively; and pushing members installed to be linearly movable with respect to the pivoting members so as to approach the stacking member and the separator, respectively, to attach the positive electrode plates and the negative electrode plates which are stored in the stacking member to the separator.

Preferably, in the automated manufacturing system of a secondary lithium battery, the stacking member further comprises pressing means for pressing the positive electrode plates and the negative electrode plates which are stored in the positive-electrode-plate storing portions and the negative-electrode-plate storing portions, respectively, against the respective pivoting members.

Preferably, in the automated manufacturing system of a secondary lithium battery, each of the pressing means comprises: an elongated hole provided at each of the positive-electrode-plate storing portions and the negative-electrode-plate storing portions; and a pressing plate which has a pressing projection to be inserted into the elongated hole, and is installed at the frame to be linearly moved by a moving member.

Preferably, in the automated manufacturing system of a secondary lithium battery, each of the pressing means further comprises an elastic member installed at the pressing projection so as to give an elastic force to corresponding one of the positive electrode plates and the negative electrode plates.

Preferably, in the automated manufacturing system of a secondary lithium battery, each of the pushing members further comprises a cushion member which corresponds to one of the positive electrode plates and the negative electrode plates, and is provided with a passage communicating with an absorbing member so as to hold the corresponding electrode plate stored in the stacking member with an absorbing force, and so as to attach to the separator.

Preferably, in the automated manufacturing system of a secondary lithium battery, the lamination unit further comprises aligning members installed to be linearly movable with respect to the stacking member so as to align the positive electrode plates or the negative electrode plates stored in the stacking member.

Preferably, in the automated manufacturing system of a secondary lithium battery, the transporting unit comprises a pair of conveyor members installed at the frame so as to circulate while contacting the separator, and so as to allow the separator to pass through a gap there between.

In the automated manufacturing system of a secondary lithium battery, it is preferable that the pair of conveyor members are arranged to be separated from one another when necessary.

Preferably, in the automated manufacturing system of a secondary lithium battery, the packing unit comprises: a base member which is installed at the frame, and is provided with a receiving rack for receiving a batch of separator both surfaces of which are laminated with positive electrode plates and negative electrode plates in a predetermined pattern; a stopper member installed at the frame to be linearly movable so as to selectively approach one end of the base member for preventing the separator being supplied to the base member from being separated from the receiving rack; a folder member installed at the frame to be linearly movable with respect to the receiving rack so that the folder can press the separator supplied to a receiving space formed by the receiving rack and the stopper member for predetermined duration, and fold the separator so that both side sections of the folded separator can have the shape of "Z", and the positive electrode plates and the negative electrode plates can alternate with each other; and a cutting/taping member for moving the separator folded in the shape of "Z" to a predetermined area, cutting the separator at a non-electrode area to which no electrode plate is attached, and taping the folded and cut piece of separator.

Preferably, in the automated manufacturing system of a secondary lithium battery, the base member comprises: a guiding jaw projected from a base plate to guide the separator supplied thereto; and a pair of recessed portions recessed into both sides of the receiving rack.

Preferably, in the automated manufacturing system of a secondary lithium battery, the base member further comprises a biassing member installed at the frame for biassing the separator toward the stopper member so that the separator supplied to the receiving rack can be easily folded in the shape of "Z".

In the automated manufacturing system of a secondary lithium battery, it is preferable that the stopper member has a stopper fork for blocking both sides of the base member, and is linearly moved by a stopper moving member.

Preferably, in the automated manufacturing system of a secondary lithium battery, the folder member comprises a folder plate moved by a folder moving member. Preferably, in the automated manufacturing system of a secondary lithium battery, the cutting/taping member comprises: a pair of clamp members for approaching both sides of the base member, clamping both sides of a piece of separator folded in the shape of "Z", and moving the piece of separator horizontally to a taping position; a cutting member installed at the frame to be movable for cutting the separator at the leading end of the base member after the separator has been moved by the clamp member; a tape supplying member installed at the frame to attach one end of tape to the piece of separator after a tape roller around which the tape is wound is moved along a tape travel path; clamp rotating members installed at the frame for rotating the clamp members predetermined times so that the piece of separator can be taped while the piece of separator to which one end of the tape is attached is rotated at both ends thereof; and a tape cutting member installed at the tape supplying member to be movable for cutting the loose end portion of the tape extended from the packed piece of separator which has been rotated by the clamp rotating members and has been packed with the tape.

Preferably, in the automated manufacturing system of a secondary lithium battery, the cutting/taping member further comprises a holder member installed at the frame to be raised and lowered so that the holder member can approach the tape supplying member and contact one surface of the separator to prevent the separator from fluttering before the separator is cut by the cutting member.

Preferably, in the automated manufacturing system of a secondary lithium battery, the unloading unit comprises: a first unloading member installed at the frame so that the first unloading member can clamp the piece of separator packed at the packing unit, move linearly toward the tray unit, pivot by an angle of 180°, and move vertically; and a second unloading member installed at the frame so as to clamp the separator clamped by the first unloading member, and unload the separator to the tray unit by pivoting with an angle of 180° and moving vertically.

Preferably, in the automated manufacturing system of a secondary lithium battery, the system further comprises a second position adjusting member installed at the frame for collectively adjusting positions of the transporting unit, the packing unit and the unloading unit to correspond to the number of electrode plates to be laminated.

The invention will now be described, by way of example only, with reference to the accompanying drawings in which:
FIG. 1 is a schematic perspective view illustrating an automated manufacturing system of a lithium secondary battery according to a preferred embodiment of the present invention;
FIGS. 2A and 2B are front and plan views of a supply unit and an adhesive applying unit that are shown in FIG. 1;
FIG. 3 is a right side view of the adhesive applying unit portion shown in FIG. 1;
FIG. 4 is a schematic plan view illustrating a distribution pattern of adhesive applied to a portion of a separator strip by the adhesive applying unit shown in FIG. 1;
FIGS. 5A, 5B, and 5C are front, plan and right side views of a lamination unit portion shown in FIG. 1;
FIGS. 6A, 6B, and 6C are front, plan and right side views of a transporting unit portion shown in FIG. 1;
FIG. 7 is a front view illustrating an example in which the separator strip is folded in the shape of "Z" by the lamination unit shown in FIG. 1;
FIGS. 8A and 8B are front and plan views of a packing unit shown in FIG. 1;
FIGS. 9A and 9B are expanded front and plan views of a base member portion shown in FIG. 8;
FIGS. 10A and 10B are front and right side views of a stopper member and a folder member shown in FIG. 8, respectively;
FIGS. 11A and 11B are front and right side views of a clamp member portion shown in FIG. 8;
FIGS. 12A and 12B are front and right side views of a cutting member portion shown in FIG. 8;
FIGS. 13A and 13B are front and right side views of a tape supplying member portion shown in FIG. 8;
FIGS. 14A, 14B, and 14C are views of a holder member portion shown in FIG. 8;
FIGS. 15A, 15B, and 15C are views of a first unloading member portion shown in FIG. 1 and FIG. 8;
FIGS. 16A, 16B, and 16C are views of a second unloading member portion shown in FIG. 1 and FIG. 8; and
FIGS. 17A and 17B are views of a tray unit portion shown in FIG. 1 and FIG. 8.

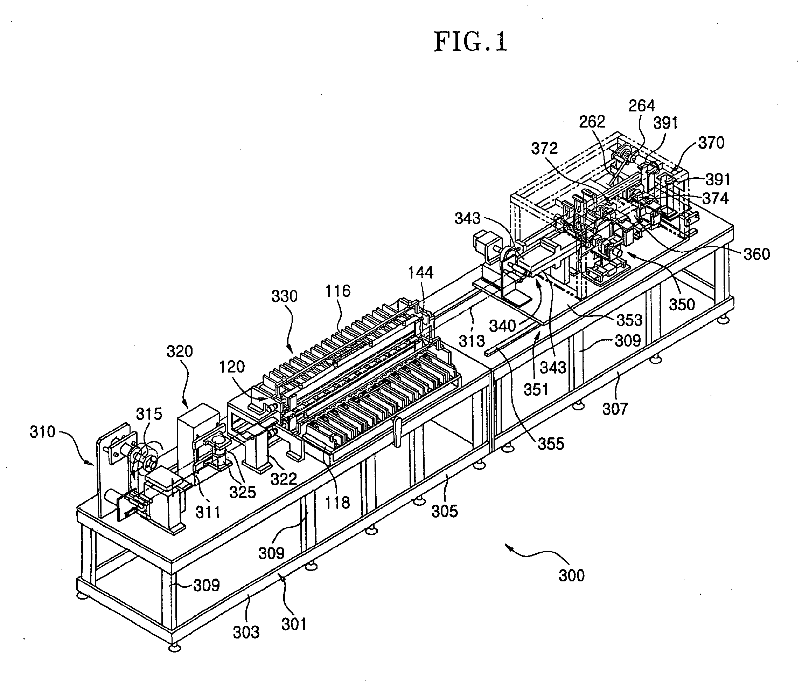

Referring to FIG. 1, a system according to the present invention can be divided into the following various units, and all the units may be installed at one frame or respective separate frames that can be integrated into one. In addition, each unit is servo-controlled by a control unit (not shown).

The system 300 comprises a supply unit 310 having a separator roller 315 rotatably installed at a frame 301 so that a separator 311 can be released and travel along a travel path 313, an adhesive applying unit 320 disposed to have the travel path 313 through the adhesive applying unit 320 so as to continuously apply adhesive to both surfaces of the separator 311 in a predetermined pattern, a lamination unit 330 for simultaneously laminating both a plurality of positive electrode plates and a plurality of negative electrode plates on respective surfaces of the separator 311 to which adhesive has been applied so that positive and negative electrode plates can correspond to the predetermined pattern, a transporting unit 340 which contacts the separator 311 supplied from the supply unit 310, and rotates so as to cause the separator 311 to travel along its travel path 313 at a predetermined speed and during predetermined time intervals, a packing unit 350 for folding and packing one batch of the separator 311 which has been laminated with the positive and negative electrode plates in the predetermined pattern by the lamination unit 330 so that the positive and negative electrode plates alternate with each other, and the section of the separator 311 can have the shape of "Z", and an unloading unit for unloading the packed separator 311 to a tray unit 370.

The frame 301 can be divided into a first frame 303 on which the supply unit 310 and the adhesive applying unit 320 are installed, a second frame 305 on which the lamination unit 330 is installed, and a third frame unit 307 on which the transporting unit 340, the packing unit 350, the unloading unit 360 and the tray unit 370 are installed. The frame 301 may be divided into a lower frame at which a plurality of supporting pillars 309 for supporting the system 300 apart from a floor are installed, and an upper frame on which components of the system 300 are seated. Various driving motors, a vacuum system, an air system, an electronic system, an adhesive supplying system, and the like are provided at the lower frame. It is preferable that the upper surface of the upper frame is arranged to be in an accurately horizontal state.

Since all the following components of the present invention, which will be described below, are installed at the frame 301, and various brackets, blocks, plates, housings, covers, collars, and the like are ancillary elements for installing respective components at the frame 301, it is made a principle that the ancillary elements are generally called the frame 301 except particular cases.

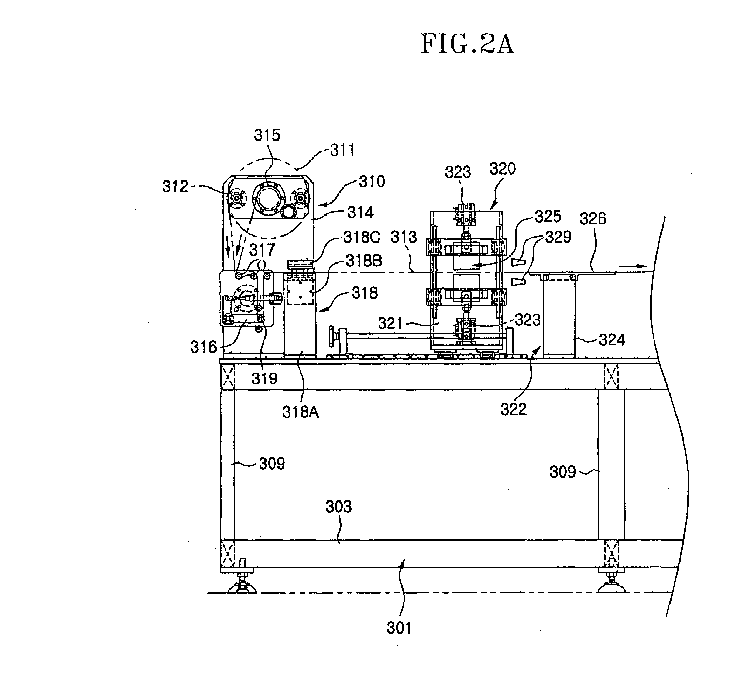

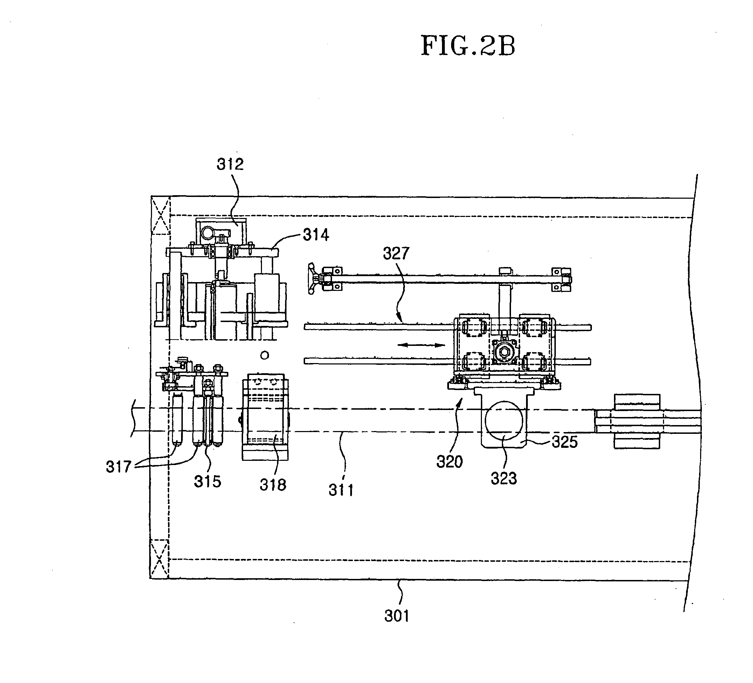

FIGS. 2A and 2B are front and plan views of a supply unit and an adhesive applying unit that are shown in FIG. 1. Referring to FIGS. 2A and 2B, the supply unit 310 comprises the above-mentioned separator roller 315, a plurality of guide rollers 317 for guiding the travel of the separator 311, and a dancing roller 319 for storing a predetermined length of the separator 311 released from the separator roller 315, and, in addition, for adjusting the tension of the separator 311.

The separator roller 315 may be configured so that the separator roller 315 is naturally rotated by the tension of the separator 311, or may be configured so that the separator roller 315 is rotated by the tension of the separator 311 while the tension is adjusted by a servomotor which is controlled by an encoder 347, and is interlocked with the encoder 347. Here, the separator 311 is intended to electrically insulate the positive electrode and the negative electrode from each other in a battery, and it is preferable that the separator 311 having a single-layered or multi-layered structure is made of a porous polymeric film of polyethylene (PE) or polypropylene (PP). The width and thickness of the separator 311 may vary with the type of finally produced battery.

The guide rollers 317 are horizontally installed at a roller bracket 314 installed on the frame 301, and rotate freely while contacting the separator 311. The dancing roller 319 is installed at a dancing arm 316 disposed at the roller bracket 314 to be pivotable. While the dancing roller 319 controls the tension of the separator 311 which maintains its predetermined travel path according to a zigzag travel path 313 formed by the guide rollers 317, and is drawn from the separator roller 315 by the pivoting motion of the dancing bar 316, the dancing roller 319 is re-supplied with the drawn quantity of the separator 311 from the separator roller 315. To this end, the supply unit 310 is provided with a potentiometer (not shown) which is controlled by the control unit and is intended to decide the tension of the separator 311 and the time of supply of the separator 311 by detecting a pivoting position of the dancing arm 316.

In addition, the supply unit 310 is provided with a stopper member 318 for selectively stopping the separator 311 which continuously travels via the guide rollers 317. The stopper member 318 comprises a clamp base 318A fixedly installed on the frame 301 to be in a position below the travel path 313, and a supply stopper 318B which is positioned over the travel path 313, and is raised and lowered by a stopper cylinder 318B so as to be able to selectively approach the upper surface of the clamp base 318A.

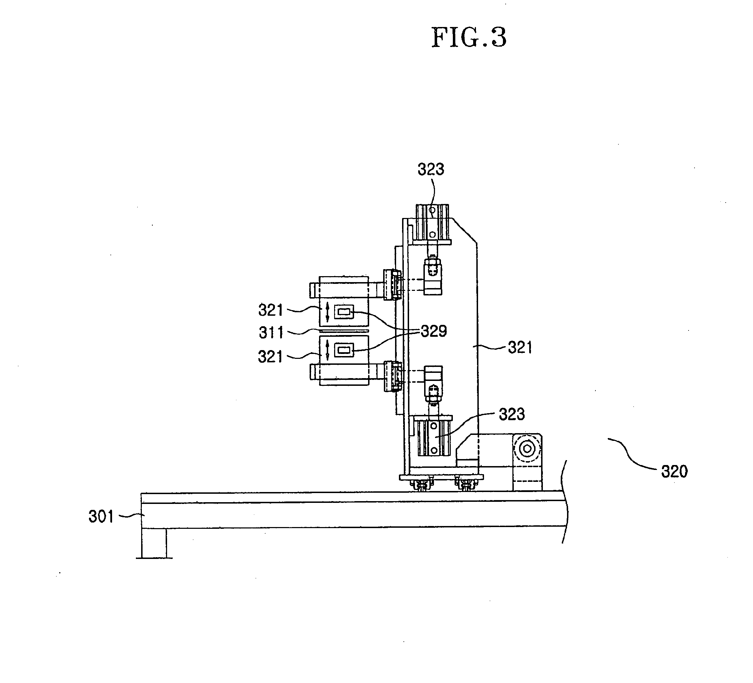

FIG. 3 is a right-side view of the adhesive applying unit portion of FIG. 1.

As shown in FIG. 1 through FIG. 3, the adhesive applying unit 320 comprises a bracket 321 installed on the frame 301 so that the position of the bracket 321 can be adjustable with respect to the frame 301, and a pair of air injectors 325 which are installed at the bracket 321 to be raised and lowered by respective cylinders 323 and are separately positioned over and below the travel path 313.

The adhesive applying unit 320 must be set at a corresponding position along the travel path 313 depending on the type and number of positive electrode plates and negative electrode plates which are adhered to the separator 311 and the type of battery. Therefore, the bracket 321 is installed on the frame 301 so that the position of the bracket 321 can be adjusted with respect to the frame 301 by a first position adjusting member 327 comprising an LM guide, movement rails, a first handle, and the like. The air injector 325 is a device to which the printing principle of 'Ink-jet Marking' is applied, and is intended to jet adhesive liquid stored in a predetermined container through a nozzle by using compressed air. It is preferable that the nozzle of the air injector 325 is capable of forming an adhesive pattern having a predetermined shape on the surface of the separator 311.

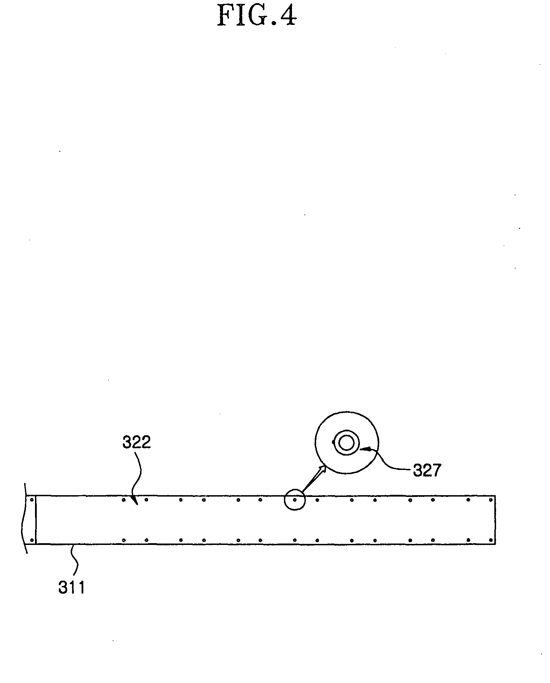

FIG. 4 is a plan view illustrating a separator a surface of which an adhesive has been applied to by the adhesive applying unit shown in FIG. 1.

As shown in FIG. 4, it is preferable that a unit adhesive applied portion has an annular shape (a doughnut shape). The reason is that the contacting area between the adhesive layer and an electrode plate and the thickness of the adhesive layer can be reduced, and excessive consumption of the adhesive can be prevented. Therefore, the so-called string effect can be reduced, and, ultimately, electron conductivity of the electrode plate can be enhanced. To this end, it is preferable that the inner diameter of the nozzle of the air injector 325 is about 50 ∼ 300 mm. As a matter of course, the nozzle may jet the adhesive to a surface of the separator 311 in a dot shape, or in a line shape, or may jet the adhesive to the whole surface of the separator 311.

As shown in FIG. 3, the air injectors 325 are symmetrically disposed with respect to the travel path 313. Therefore, the adhesive jetted by the two air injectors 325 disposed to face each other is simultaneously applied to both surfaces of the horizontally travelling separator 311. Accordingly, since the adhesive is simultaneously applied to both surfaces of the separator 311, efficiency of the adhesive applying process can be enhanced. In addition, in order to dry the adhesive jetted on the both surfaces of the separator 311, adhesive drying members 329 are installed over and below the travel path 313. It is preferable that the adhesive drying member 329 has an air nozzle structure for jetting dry air, and the operation thereof is selectively controlled by the control unit.

As shown in FIG. 1 and FIGS. 2A and 2B, a travel guide member 322 is installed between the adhesive applying unit 320 and the lamination unit 330. The travel guide member 322 is intended to prevent the separator 311 having passed the adhesive applying unit 320 from being loosened, and is installed to be disposed below the travel path 313 and to be able to contact the lower surface of the separator 311. The travel guide member 322 comprises a guide block 324 installed on the frame 301, and a side guide 326 which has a finished upper surface and is installed on the guide block 324 to project toward the adhesive applying unit 320 and the lamination unit 330.

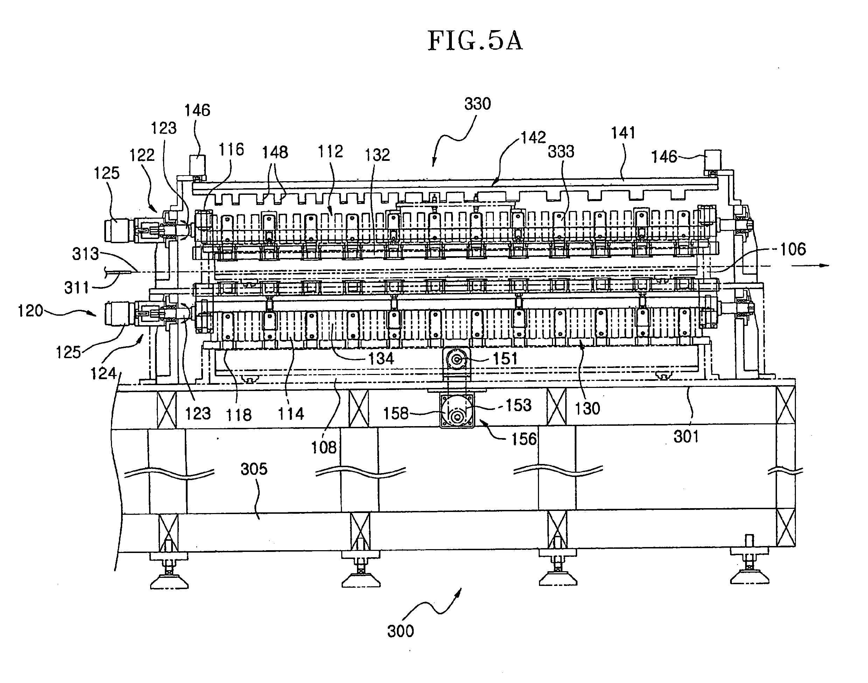

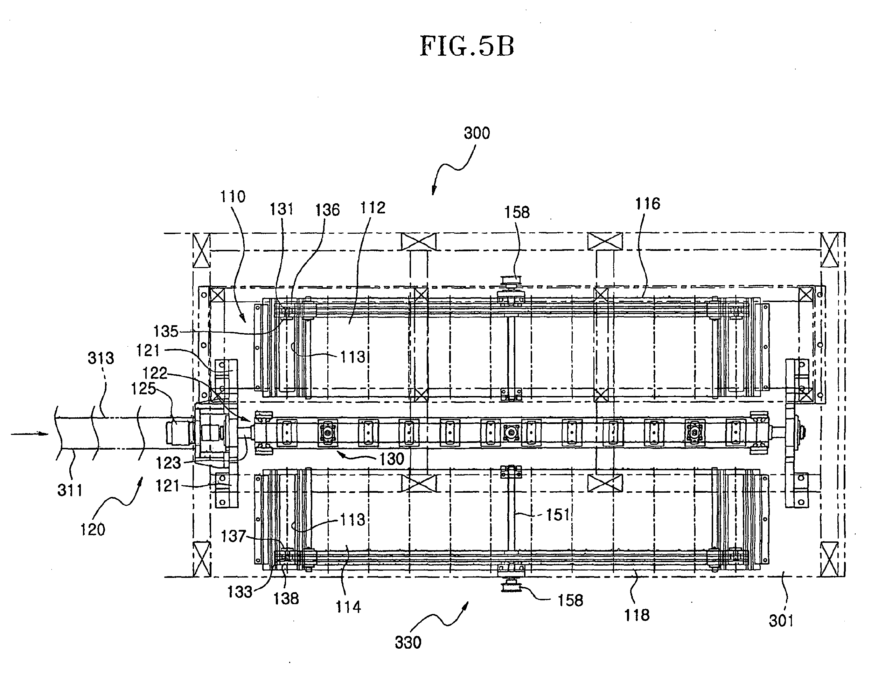

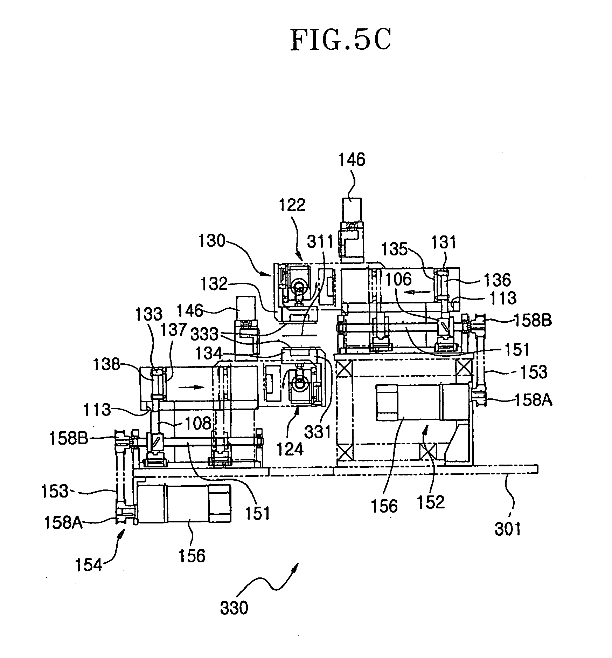

FIGS. 5A through 5C are, respectively, front, plan, and right side views of the lamination unit portion of FIG. 1.

As shown in FIG. 1 and FIGS. 5A through 5C, the lamination unit 330 is intended to simultaneously attach and laminate a batch of positive electrode plates and negative electrode plates to two respective surfaces of the separator 311, to which the adhesive has been applied in a predetermined pattern, so that the electrode plates correspond to the predetermined pattern.

The lamination unit 330 comprises a stacking member 110 provided with a plurality of positive-electrode-plate storing portions 112 each of which a multitude of positive electrode plates are stored in, and a plurality of negative-electrode-plate storing portions 114 each of which a multitude of negative electrode plates are stored in, which, i.e., the portions 112 and the portions 114, are disposed to be asymmetrical about the separator 311, a pivoting member 120 comprised of positive-electrode-plate pivoting members 122 and negative-electrode-plate pivoting members 124 which are installed at the frame 301 to be pivotable so as to face the positive-electrode-plate storing portions 112 and the negative-electrode-plate storing portions 114, respectively, and a pushing member 130 comprising positive-electrode-plate pushing members 132 and negative-electrode-plate pushing members 134 which are installed to be linearly movable with respect to the respective positive-electrode-plate pivoting members 122 and the respective negative-electrode-plate pivoting members 124 so that the positive electrode plates 102 and the negative electrode plates 104 which are stored in the stacking member 110 can be attached and laminated to the separator 311, respectively.

The stacking member 110 is a storage place for arranging and storing positive electrode plates and negative electrode plates so that the positive electrode plates and the negative electrode plates which are required for a battery, (for example, when 5 positive electrode plates are required for a battery, 6 negative electrode plates are disposed so that one more negative electrode plate can be attached to a separator), can be attached to a separator simultaneously, and is divided into a positive-electrode-plate magazine 116 and a negative-electrode-plate magazine 118 for storing positive electrode plates and negative electrode plates, respectively. The positive-electrode-plate magazine 116 and the negative-electrode-plate magazine 118 are asymmetrically disposed with respect to the horizontal travel path 313 of the separator 311. That is, when the positive-electrode-plate magazine 116 is positioned at a first step, the negative-electrode-plate magazine 118 is positioned at a second step. As a matter of course, the opposite is possible. Though the positions thereof and the facing directions thereof are different from each other, the positive-electrode-plate magazine 116 and the negative-electrode-plate magazine 118 have the same structure. The positive electrode plate 102 is a standardized product made by applying a positive active material such as LiCO2, or LiMn2O2 having a spinel structure or a layered structure to the surface of a metal plate such as an aluminium foil, drying the applied positive active material, cutting the metal plate into pieces of a predetermined size, and providing a positive tab at a predetermined position. The negative electrode plate 104 is a standardized product made by applying a negative active material such as a graphite material or a carbon material processed to have electrochemical characteristics, for example, mesocarbon microbeads, and meso-phase pitch carbon film to the surface of a metal plate such as a copper foil, drying the applied negative active material, cutting the metal plate into pieces of a predetermined size, and providing a negative tab at a predetermined position.

The positive-electrode-plate magazine 116 and the negative-electrode-plate magazine 118 in which a plurality of standardized positive electrode plates and a plurality of standardized negative electrode plates are stored respectively are provided with twelve positive-electrode-plate storing portions 112 and twelve negative-electrode-plate storing portions 114 which are disposed to be equidistant from each other by taking into consideration the thickness of the positive and negative electrode plates and the length of folded portion of the separator when the separator is folded in the shape of "Z". At the bottoms of the positive-electrode-plate storing portions 112 and the negative-electrode-plate storing portions 114, respective elongated holes 113 are formed. Positive-electrode-plate pressing projections 136 of positive-electrode-plate pressing plates 106 installed at the frame 301 to be linearly movable are inserted into respective elongated holes 113, and negative-electrode-plate pressing projections 138 of negative-electrode-plate pressing plates 108 installed at the frame 301 to be linearly movable are inserted into respective elongated holes 113. The elongated holes 113 and the pressing projections 136 and 138 constitute pressing means for pressing the positive-electrode-plates and the negative-electrode-plates which are stored in the respective positive-electrode-plate storing portions 112 and the respective negative-electrode-plate storing portions 114 toward the travel path 313.

The pressing means further comprise positive-electrode-plate elastic members 131 and negative-electrode-plate elastic members 133. The elastic members 131 and 133 are intended to give elastic forces to the positive electrode plates 102 and the negative electrodes plates 104 which are stored in the positive-electrode-plate storing portions 112 and the negative-electrode-plate storing portions 114, and are installed at the pressing projections 136 and 138. The elastic members 131 and 133 comprise pressing plates 135 and 137 installed to contact a positive electrode plate 102 and a negative electrode plate 104, respectively, guide rods interposed between the pressing plates 135 and 137 and the pressing projections 136 and 138, and springs installed at the outer circumferential surfaces of the guide rods.

The positive-electrode-plate magazine 116 and the negative-electrode-plate magazine 118 further comprise a positive-electrode-plate aligning member 142 and a negative-electrode-plate aligning member 144 which are installed to be linearly movable with respect to the stacking member 110 so as to selectively align positive electrode plates 102 or negative electrode plates 104.

The positive-electrode-plate aligning member 142 and the negative-electrode-plate aligning member 144 comprise a positive-electrode-plate aligning bar 141 and a negative-electrode-plate aligning bar (not shown) which are disposed to have a predetermined space from and to be parallel to the respective leading ends of the magazines 116 and 118, and are moved upward and downward by aligning cylinders 146, and a plurality of aligning projections 148 installed at the positive-electrode-plate aligning bar 141 and the negative-electrode-plate aligning bar in the lengthwise directions thereof so as to contact both edges of the positive electrode plates 102 and the negative electrode plates 104. It is preferable that a touch pad made of a soft material is installed at the leading end of the aligning projection 148 so as to not damage the positive electrode plate 102 or the negative electrode plate 104.

The positive-electrode-plate pressing plate 106 and the negative-electrode-plate pressing plate 108 are linearly moved with respect to the frame 301 by a positive-electrode-plate moving member 152 and a negative-electrode-plate moving member 154, respectively. Each of the plate moving members 152 and 154 comprises a timing pulley 158A provided at the rotating shaft of a motor 156 which is installed at the frame 301 and is controlled by the control unit, a timing pulley 158B provided at one end of a ball screw 151 which is installed at the frame 301 through the pressing plates 106 and 108 to be rotatable, and a timing belt 153 for connecting the timing pulleys 158A and 158B.

The pivoting member 120 pivots at an angle of 90° between the travel path 313 and the positive-electrode-plate magazine 116 and the negative-electrode-plate magazine 118. Each of the positive-electrode-plate pivoting members 122 and the negative-electrode-plate pivoting members 124 comprises a bracket 121 installed at the frame 301, a rotary shaft 123 installed at the bracket 121 to be parallel to the travel path 313, and a cylinder 125 which is installed at the bracket 121 to rotate the rotary shaft 123 at an angle of 90° and is controlled by the control unit.

The positive-electrode-plate pushing members 132 and the negative-electrode-plate pushing members 134 are installed to be linearly movable with respect to the positive-electrode-plate pivoting members 122 and the negative-electrode-plate pivoting members 124 so that the pushing members 132 and 134 can approach or be separated from the stacking member 110 and the separator 311, and, therefore, can hold a batch of positive electrode plates 102 and negative electrode plates 104 which are stored in the positive-electrode-plate magazine 116 and the negative-electrode-plate magazine 118 by using respective vacuum or suction forces, and attach the electrode plates 102 and 104 to both surfaces of the separator 311.

Each of the positive-electrode-plate pushing members 132 and the negative-electrode-plate pushing members 134 comprises a pushing bar 331 provided with a suction passage therein to communicate with a vacuum or suction member (not shown), and a cushion member 333 installed at the pushing bar 331 to contact a positive electrode plate 102 or a negative electrode plate 104.

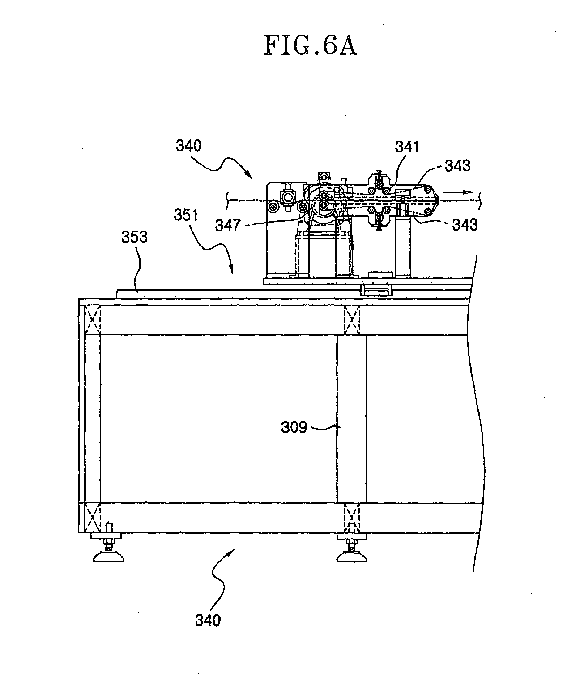

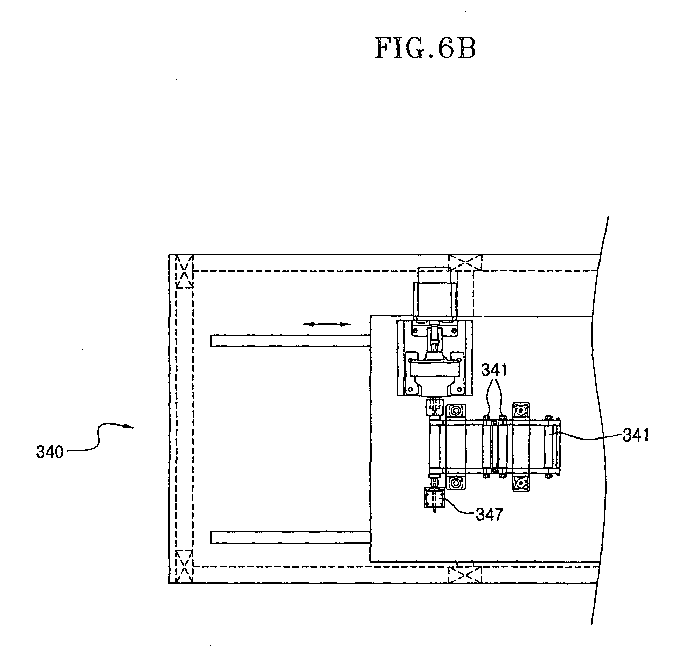

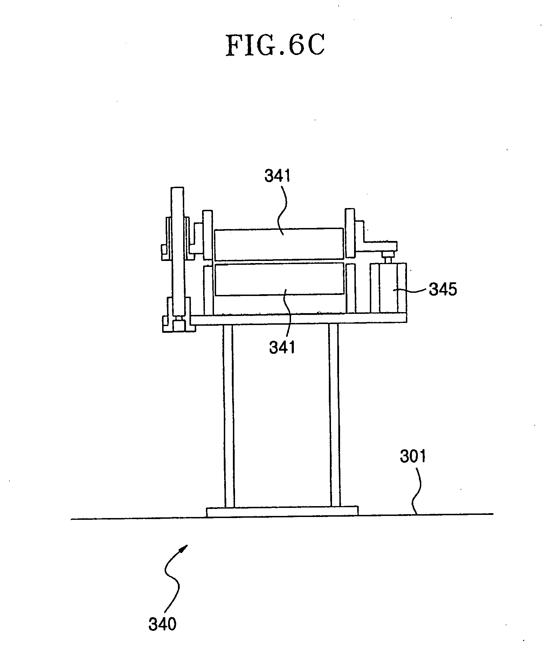

FIGS. 6A through 6C are front, plan, and right side views of the transporting unit portion of FIG. 1, respectively.

Referring to FIG. 1 and FIGS. 6A through 6C, the transporting unit 340 comprises a pair of conveyor members 343 each of which encircles a plurality of conveyor rollers 341 installed at the frame to be rotatable so that the conveyor members 343 can contact both surfaces of the separator 311 and cause the separator 311 to travel therebetween. The conveyor members 343 are divided into an upper conveyor and a lower conveyor, and the upper conveyor is installed to be raised apart from the lower conveyor when necessary. To this end, the upper conveyor is arranged to be moved by a conveyor cylinder 345.

The transporting unit 340 is a power source to selectively cause the separator 311 to travel through the travel path 313, and an encoder 347 which is controlled by the control unit and is interlocked with the supply unit 310 is installed in the vicinity of the transporting unit 340. It is preferable that the encoder 347 is programmed to confirm information transferred from the control unit and to perform controlling of preset values, for example, the travel speed and stop position of the separator 311, the supply speed of the separator 311 released from the separator roller 315 of the supply unit 310, the lengths of the areas of the separator 311, to which the positive electrode plate 102 or the negative electrode plate 104 is attached (electrode plate area) and neither of them is attached ( non-electrode-plate area).

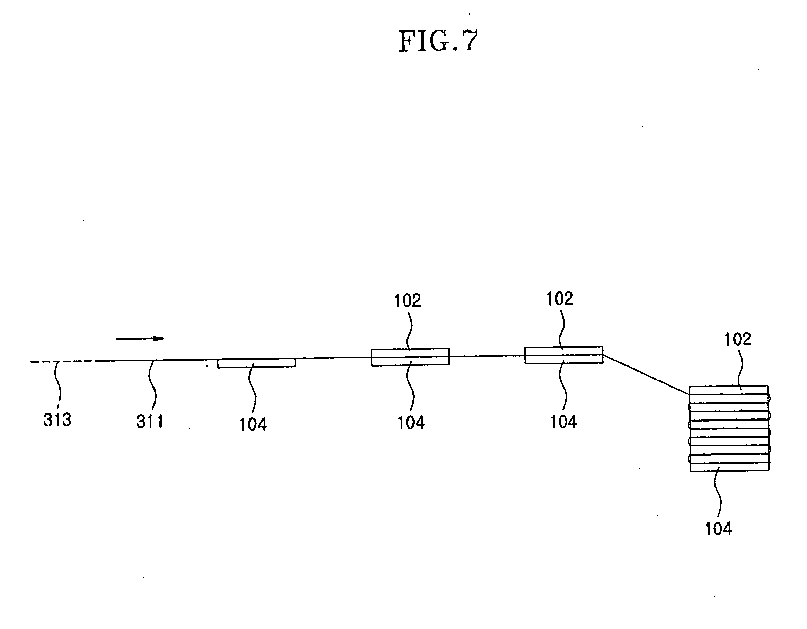

The packing unit 350 is intended to fold the separator 311 supplied through the leading end of the transporting unit 340, after the separator 311 is laminated with the positive and negative electrode plates 102 and 104 by the lamination unit 330, so that the section of the separator 311 can have the shape of "Z" as shown in FIG. 7, and to tape the folded separator 311 with a tape.

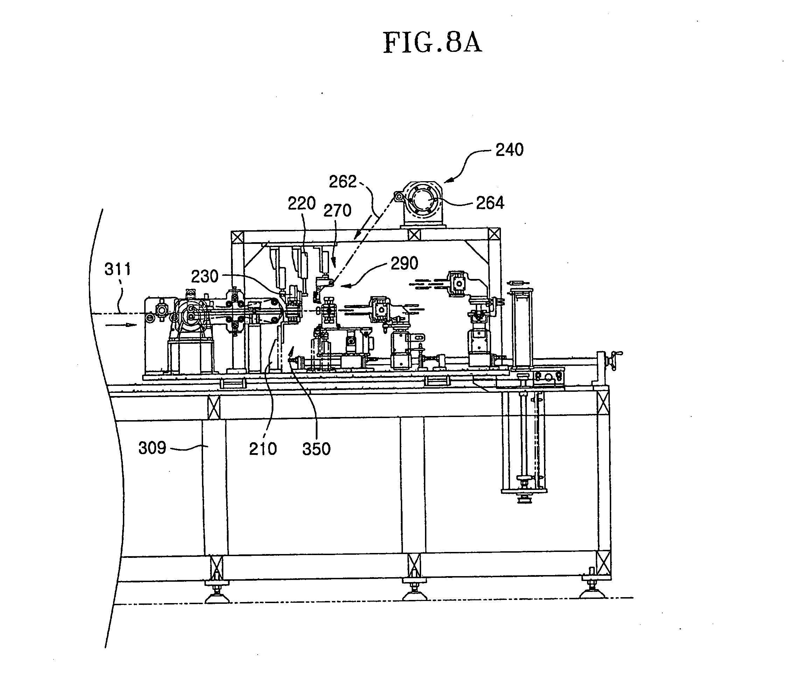

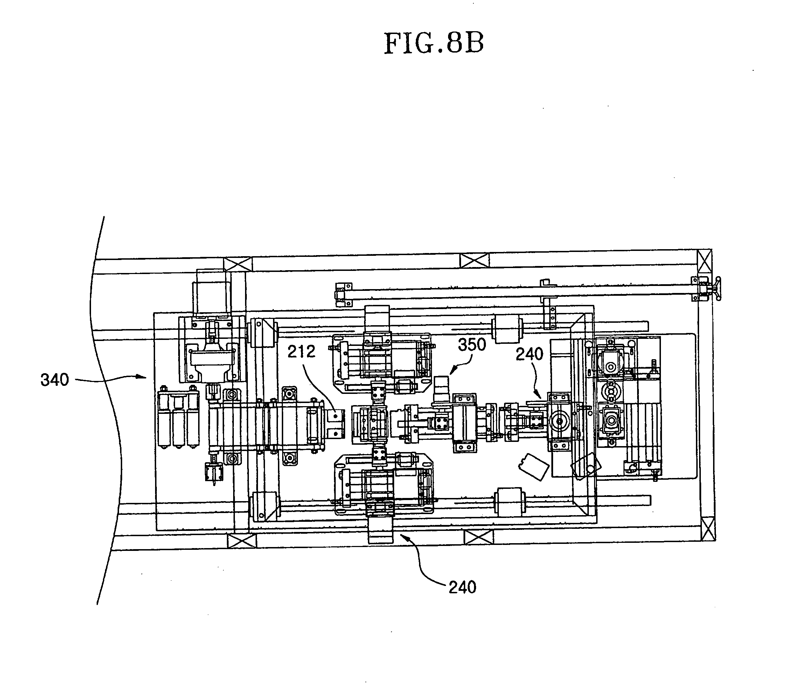

FIGS. 8A and 8B are front and plan views of the packing unit portion shown in FIG. 1. Referring FIG. 1 and FIGS. 8A and 8B, the packing unit 350 comprises a portion of the frame 301, a base member 210 to which one batch of the separator 311 both surfaces of which have been laminated with a plurality of positive and negative electrode plates 102 and 104 in a predetermined pattern is supplied, and in which the one batch of the separator 311 is received, a stopper member 220 installed at the frame 301 to be raised and lowered so that the separator 311 received in the base member 210 can be prevented from being separated from the receiving rack 212, a folder member 230 continuously reciprocating to fold the separator 311 supplied to a receiving space (not shown) formed by the receiving rack 212 and the stopper member 220 so that the section of the separator 311 can have the shape of "Z", a cutting/taping member 240 for moving the separator 311 folded in the shape of "Z" to a predetermined taping position, for cutting a non-electrode-plate area of the separator 311 to which any electrode plate is not attached, and for taping the cut separator 311.

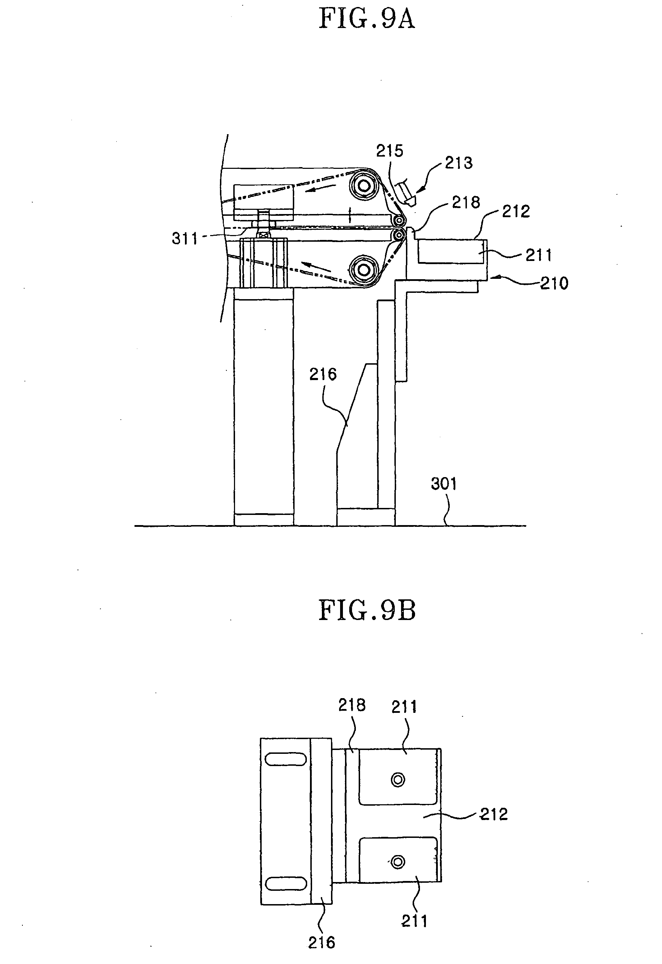

FIGS. 9A and 9B are expanded front and plan views of the portion of the base member of the packing unit.

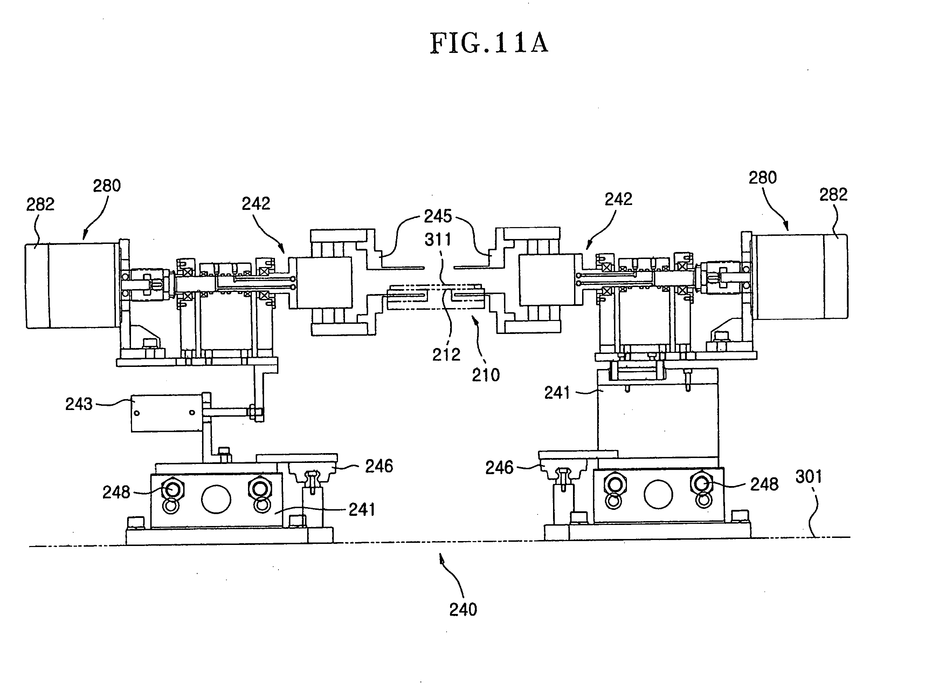

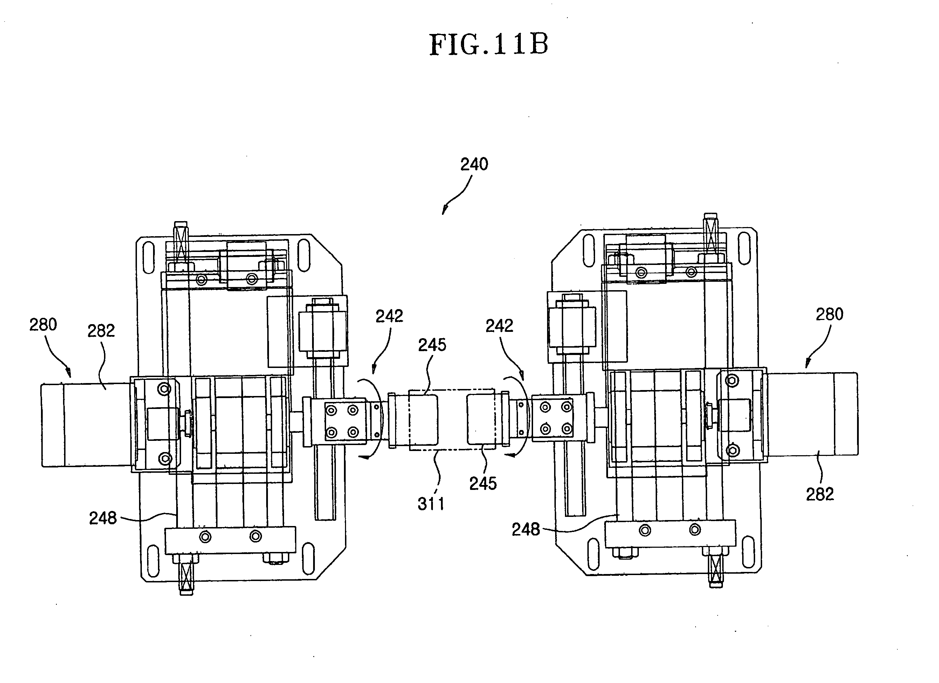

Referring to FIGS. 9A and 9B, the base member 210 comprises a receiving rack 212 which has a planar shape and is installed at the base plate 216 installed at the frame 301, a guiding jaw 218 projected from the base plate 216 for guiding the supplied separator 311 toward the receiving rack 212, and a pair of recessed portions 211 recessed into both sides of the receiving rack 212. It is preferable that the upper surface of the guiding jaw 218 is disposed to be parallel to the travel path 313 and is specially surface-treated. The recessed portion 211 is a space into which a finger member 245 (FIGS. 11A and 11B) of the cutting/taping member 240 is inserted.

In addition, the base member 210 further comprises a biasing member 213 for biasing the separator 311 toward the direction opposite to the separator supplied direction, that is, toward the stopper member 220 so that the separator 311 supplied to the receiving rack 212 can be easily folded to be almost the shape of "Z". It is preferable that the biasing member 213 comprises an air nozzle 215 capable of pushing the separator 311 fluttering due to air blowing force toward the stopper member 220.

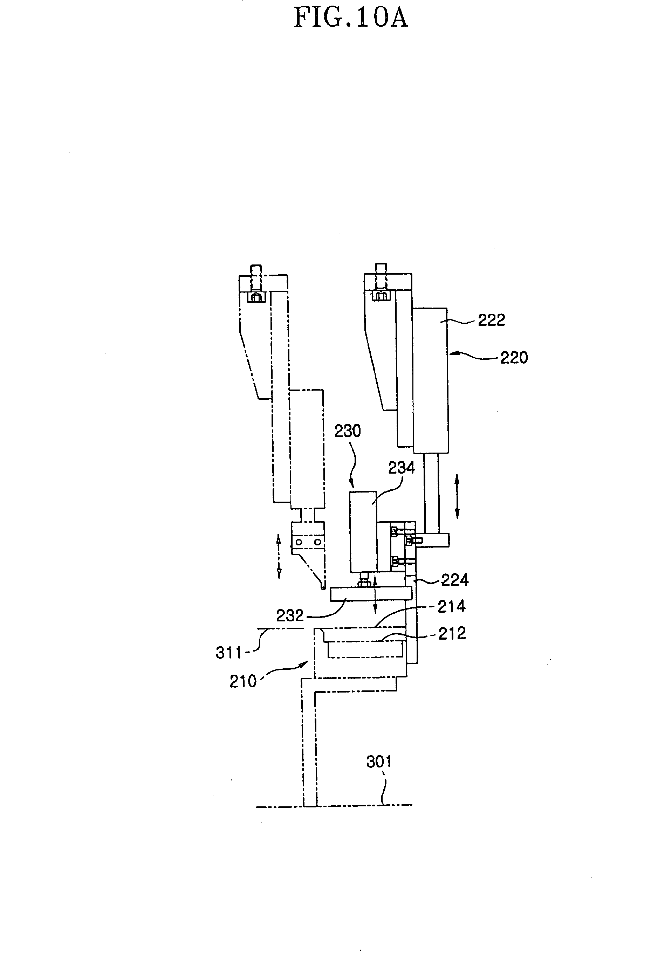

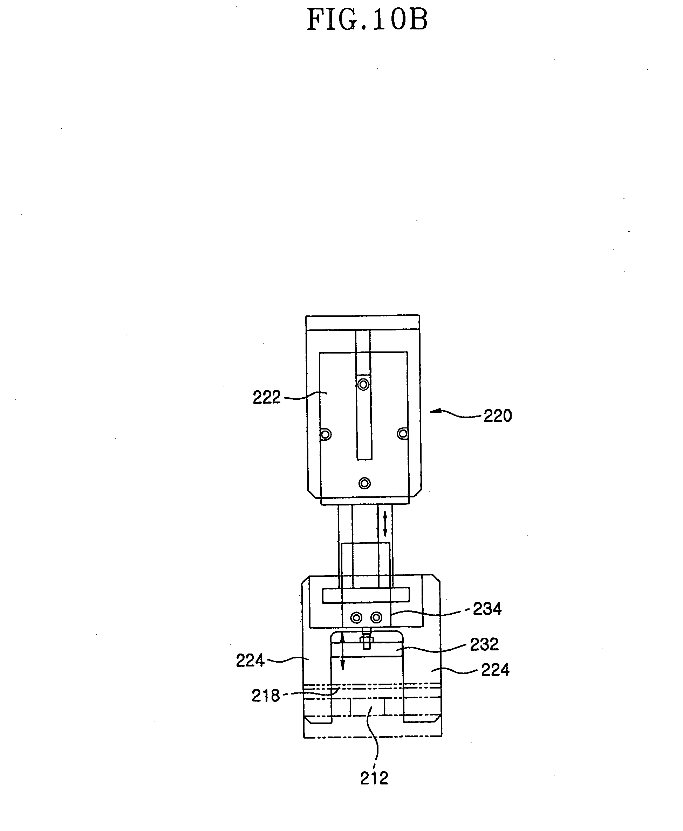

FIGS. 10A and 10B are front and right side views of the stopper member and the folder member shown in FIG. 1.

Referring to FIGS. 10A and 10B, the stopper member 220 is installed to be capable of being moved linearly back and forth with respect to the frame 301 by a stopper moving member 222 which is installed at the frame 301 and is controlled by the control unit so that the stopper member 220 can block selectively a side of the base member 210 to form the receiving space and prevent the separator 311 supplied to the receiving rack 212 from being separated from the receiving rack 212. It is preferable that the stopper member 220 has two stopper forks 224 at its one end, and a vacant space is formed between the two stopper fork 224.

The folder member 230 is intended to continuously press and fold the separator 311 supplied to the receiving space and biassed toward the stopper member 220 so that the section of the separator 311 at both side portions of the positive electrode plates 102 and the negative electrode plates 104 can have the shape of "Z", and to cause the positive electrode plates 102 and the negative electrode plates 104 alternate with each other. The folder member 230 comprises a folder plate 232 disposed to be raised or lowered at a position corresponding to the receiving space, and a folder cylinder 234 which is installed at the stopper member 220 and controlled by the control unit. Therefore, during packing of a batch of the separator 311, while the stopper member 220 moves back and forth once, the folder plate 232 moves back and forth as many times as the number of electrode plates required for a battery, that is, the number of the positive electrode plates and the negative electrode plates which alternate with each other.

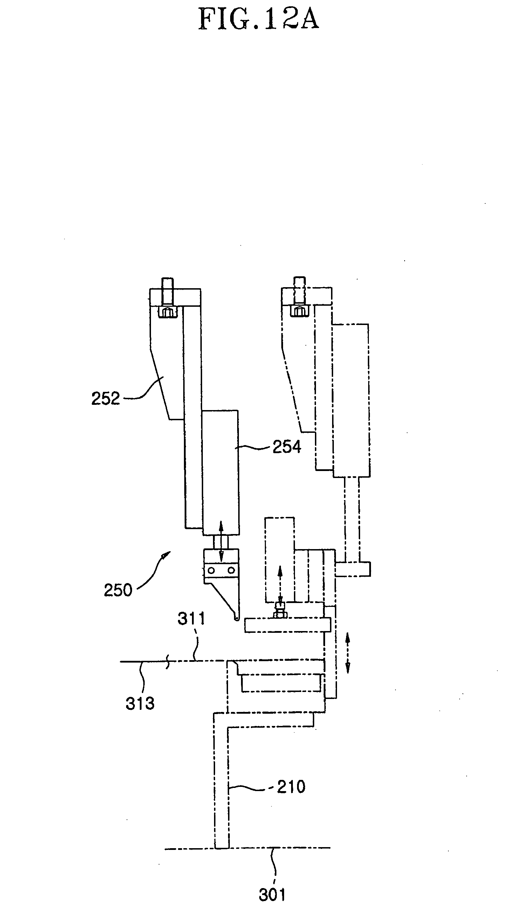

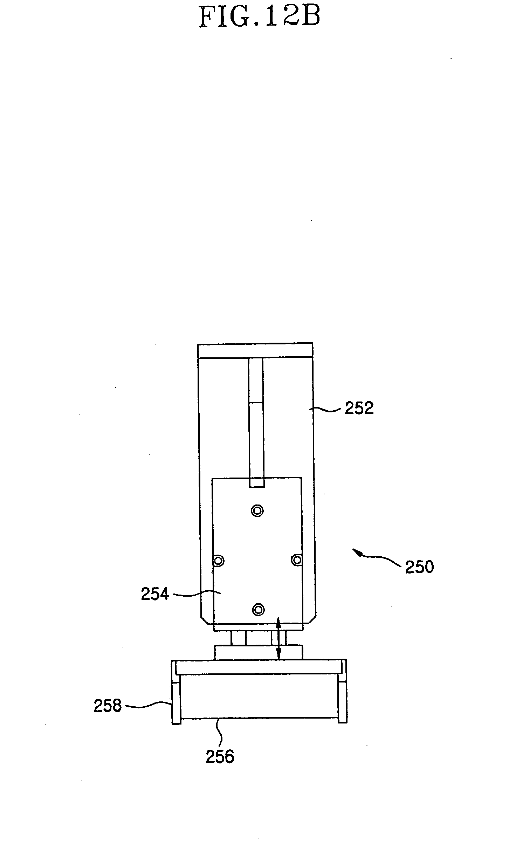

Referring to FIGS. 11A and 11B, the cutting/taping member 240 comprises a pair of clamp members 242 which approach both sides of the base member 210, clamp both sides of a piece of separator which is folded in the shape of "Z", and are moved horizontally to a taping position, a cutting member 250 (FIGS. 12A and 12B) installed at the frame 301 to be movable for cutting the separator 311 from above the base member 210 after the piece of separator 311 is moved by the clamp members 242, a tape supplying member 270 (FIG. 8) installed at the frame 301 so as to attach one end of a tape 262 to a piece of separator 311 after a tape roller 264 around which the tape 262 is wound is moved to the taping position through a tape travel path, clamp rotating members 280 (FIGS. 11A and 11B) installed at the frame 301 for rotating the clamp members 242 predetermined times so that the piece of separator can be taped while the piece of separator to which one end of the tape 262 is attached is rotated at both ends thereof, a tape cutting member 290 (FIG. 8A) installed at the frame 301 to be movable for cutting the loose end portion of the tape 262 extended from the packed piece of separator 311 which has been rotated by the clamp rotating members 280 and has been packed with the tape 262, and a holder member 244 installed at the frame 301 to be raised and lowered so that the holder member 244 can approach the tape supplying member 270 and contact the lower surface of the separator 311 to prevent the separator 311 from fluttering before the separator 311 is cut by the cutting member 250.

Referring to FIGS. 11A and 11B, the pair of clamp members 242 are installed to be symmetrical with respect to the travel path of the separator 311 and to be parallel to the frame 301. Each clamp member 242 comprises a movable block 241 which is moved back and forth between the base member 210 and the taping position along an LM guide 246 and guide rails 248 which are parallel to the travel path of the separator 311, and a pair of finger members 245 installed at the movable block 241 so as to clamp the piece of separator 311 while being positioned at the recessed portion 211 and being operated by an air cylinder 243.

As shown in FIGS. 12A and 12B, the cutting member 250 is intended to cut the leading end of a non-attached area of the piece of separator 311 moved to the taping position by the clamp members 242, and comprises a heating cutter 258 which is provided with a heating wire 252. The heating cutter 258 is installed at one end of a cylinder 254 to be disposed over the travel path 313 so that the heating cutter 258 can be selectively moved toward the base member 210 by the cylinder 254 to contact the separator 311, and the heating wire 252 heated to a predetermined temperature can cut the separator 311. The cylinder 254 is supported by a bracket 252 which is installed at the frame 301.

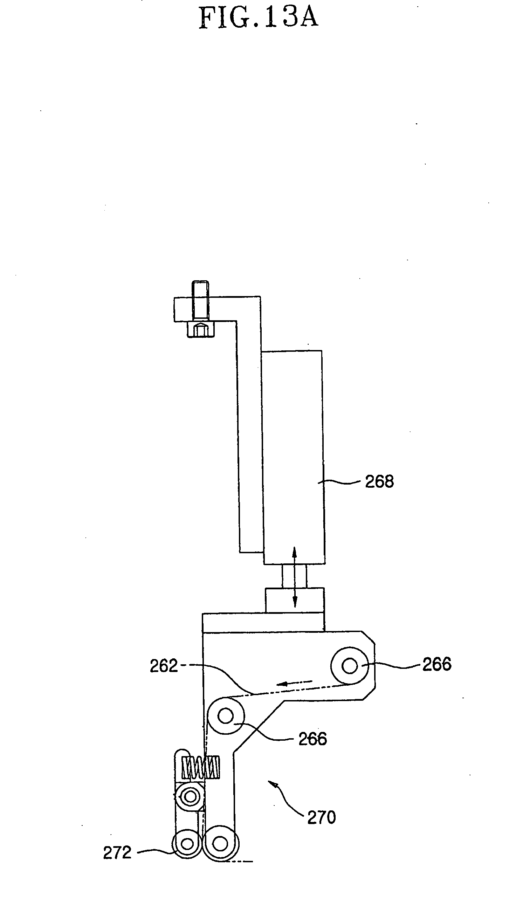

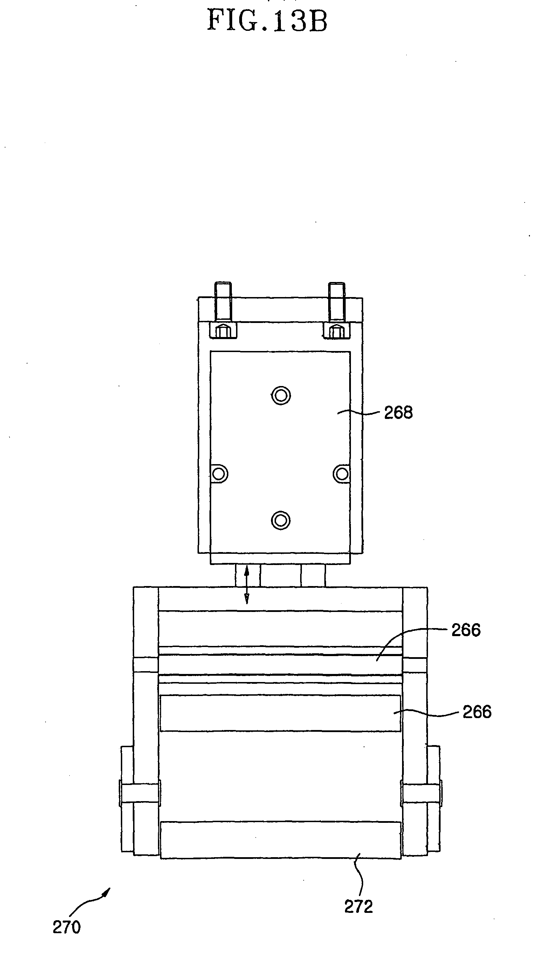

Referring to FIG. 1, FIG.8A, and FIGS. 13A and 13B, the tape supplying member 270 comprises a tape supplying roller 264 and a plurality of tape guiding rollers 266 which are installed at the frame 301, and a pair of tape attaching rollers 272 which are installed at one end of a cylinder 268 installed at the frame 301 to be raised or lowered by the cylinder 268 and are positioned on the travel path of the tape 262 so that one end of the tape 262 can selectively contact the upper surface of the separator 311.

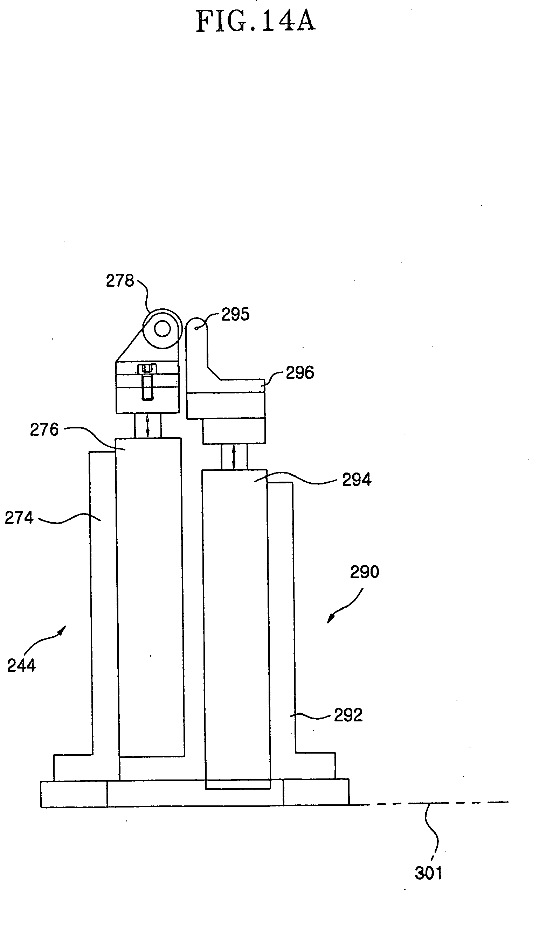

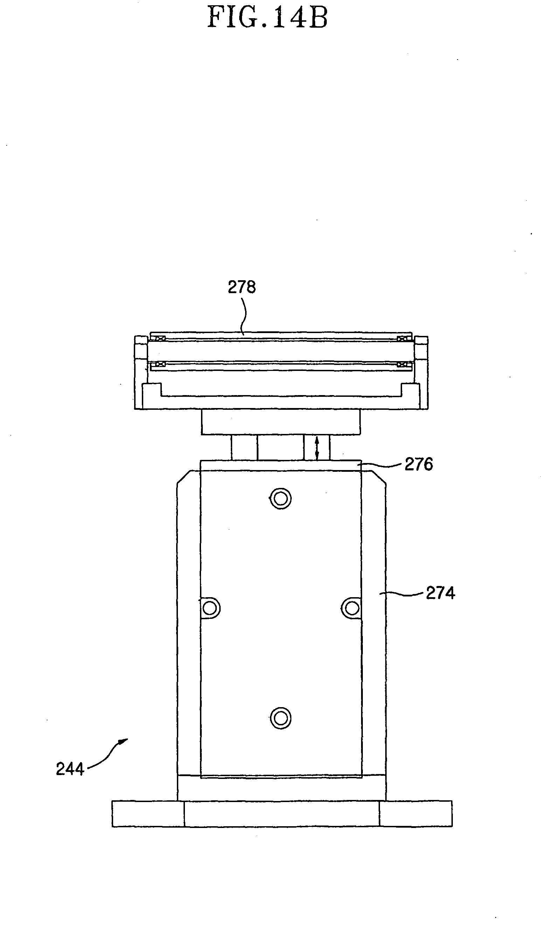

As shown in FIGS. 14A and 14B, the holder member 244 is disposed to correspond to the tape attaching rollers 272. The holder member 242 is intended to prevent a non-attached area of the separator 311 from fluttering since the separator 311 is cut before a piece of separator 311 is taped, and, therefore, the fluttering occurs. To this end, the holder member 244 comprises a bracket 274 installed at the frame 301, and a holding roller 278 installed so as to be selectively raised and lowered by a cylinder 276 installed at a bracket 274 until the holding roller 278 contact the lower surface of the separator 311. As shown in FIG. 11A and 11B, each of the clamp rotating members 280 comprises a stepping motor 282 installed at the movable block 241 so that the axis of rotation of the stepping motor 282 can be coaxial with that of the finger members 245, and, therefore, the clamp rotating member 280 can rotate the finger members 245 with the rotational force thereof.

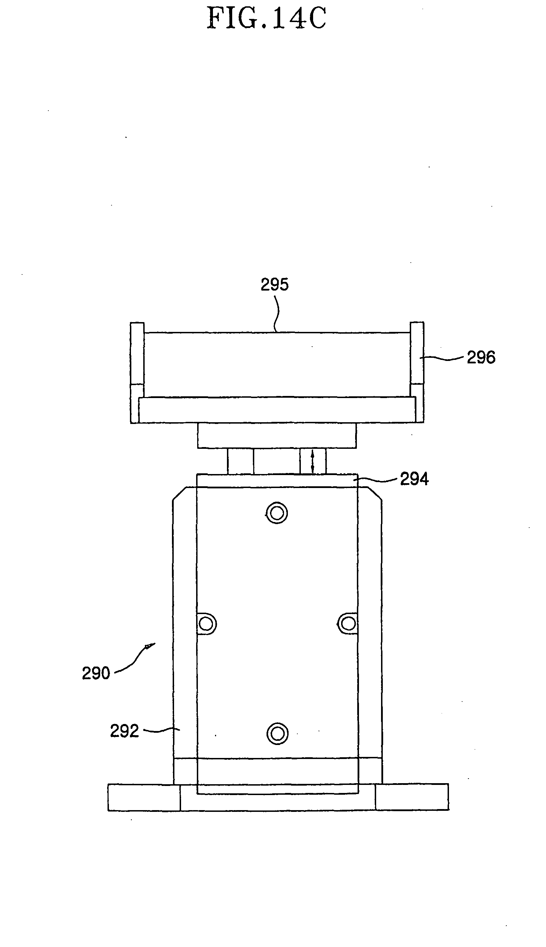

As shown in FIGS. 14A and 14C, the tape cutting member 290 is installed at the frame 301 to be close to the holder member 244 so that the tape cutting member 290 can be rotated by the clamp rotating member 280 (FIGS. 11A and 11B), and cut the loose end portion of the tape 262 (FIGS 8A) extended from the packed piece of separator 311. The tape cutting member 290 comprises a bracket 292 installed at the frame 301, and a cutting body 296 having a cutting wire 295 for heating and cutting the tape 262, which is raised and lowered by a cylinder 294 which is installed at the bracket 292 and is operated below the travel path by the control unit.

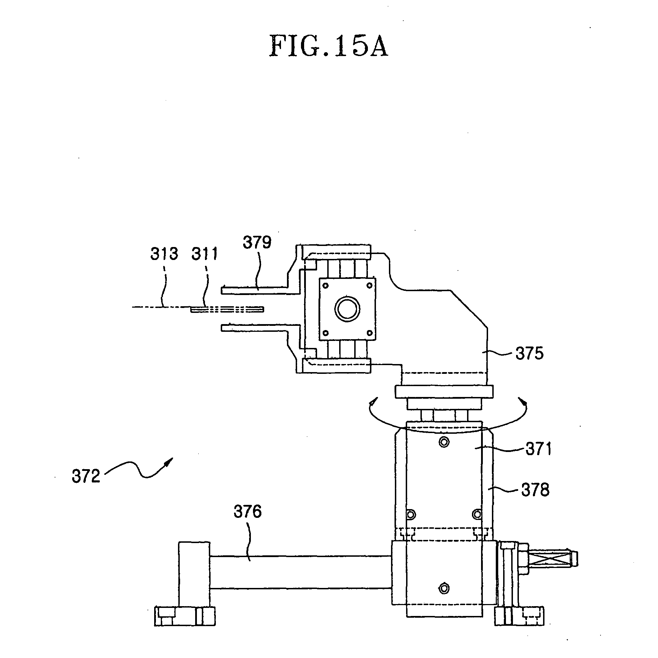

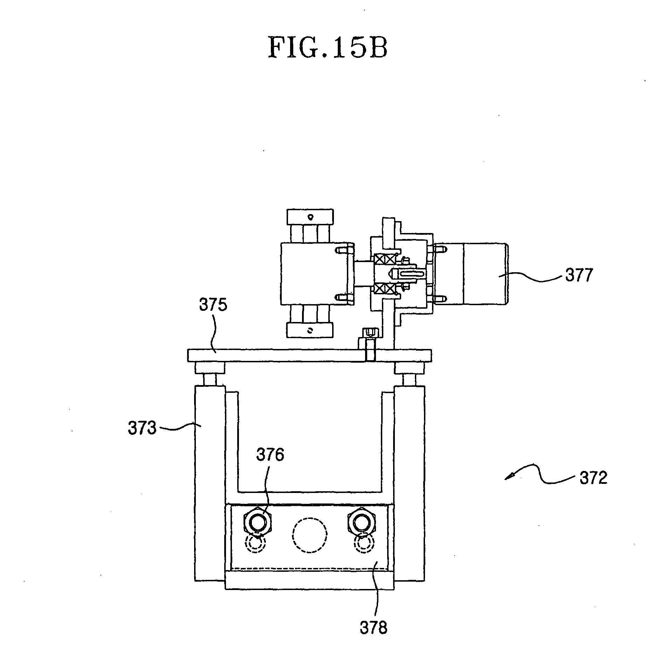

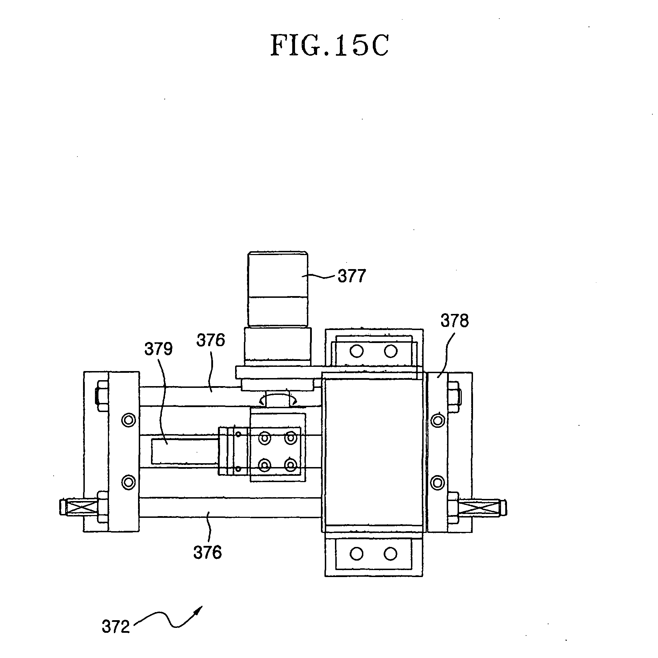

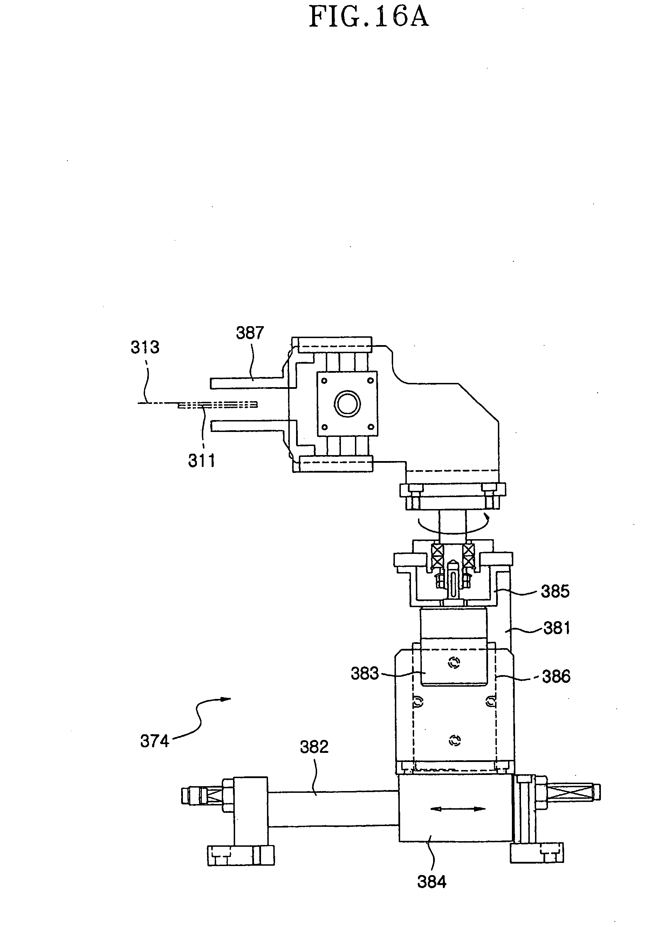

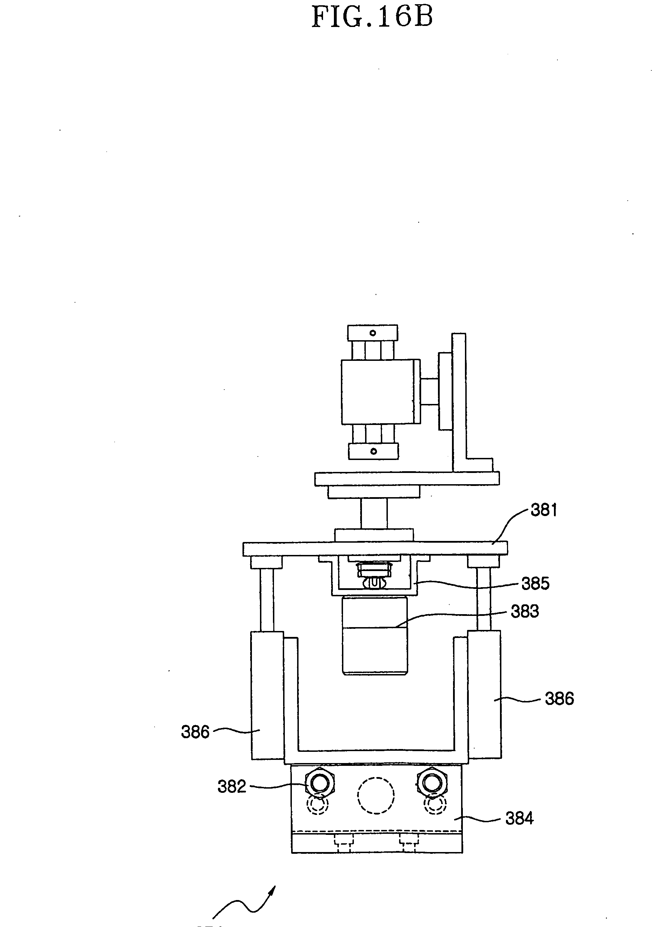

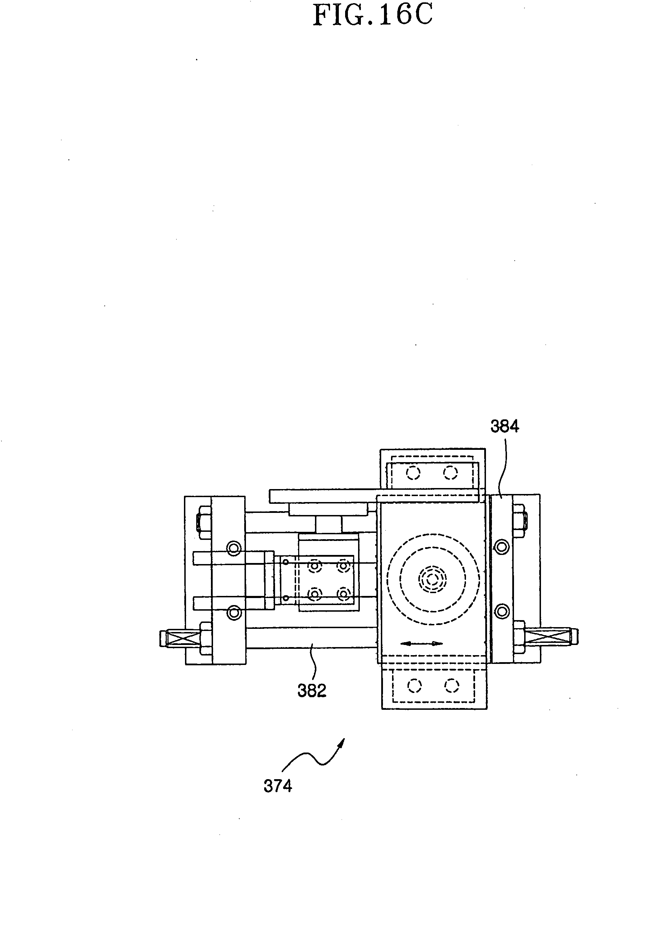

In addition, referring to FIG. 1, the unloading unit 360 is intended to unload a packed piece of separator 311 packed at the packing unit 350 to the tray unit 370, and comprises a first unloading member 372 (FIG. 15A through 15C) and a second unloading member 374 (FIG. 16A through 16C).

As shown in FIGS. 15A through 15C, the first unloading member 372 comprises a first unloading horizontal block 378 which is linearly movable in a direction parallel to the travel path 313 along a guide rail 376, a first pivotable bracket 375 installed to be raised and lowered by a first vertical cylinder 371 installed at the first unloading horizontal block 378, first air fingers 379 which are installed at the first pivotable bracket 375 so as to be rotated vertically by an angle of 180° by a first rotary member 377 for being passed a piece of separator 311 held by the finger members 245 of the clamp members 242.

As shown in FIGS 16A through 16C, the second unloading member 374 comprises a second unloading horizontal block 384 which is linearly movable in a direction parallel to the travel path 313 along a guide rail 382, a second pivotable bracket 381 installed to be raised and lowered by a second vertical cylinder 386 installed at the second unloading horizontal block 384, second air fingers 387 which are installed at the second pivotable bracket 381 so as to be rotated horizontally by an angle of 180° by a second rotary member 383 for being passed the piece of separator 311 held by the first air fingers 379 and unloading the piece of separator 311 to trays 391 of the tray unit 370.

In addition, as shown in FIG. 1, the system 300 further comprises a second position adjusting member 351 installed at the frame 301 so as to adjust positions of the transporting unit 340, the packing unit 350, and the unloading unit 360 collectively, and, therefore, so as to set the relative positions of the components with respect to the frame 301 to correspond to a number of electrode plates to be laminated.

The second position adjusting member 351 comprises a movable plate 353 on which the transporting unit 340, the packing unit 350, and the unloading unit 360 are fixedly installed, an LM guide 355 interposed between the frame 301 and the movable plate 353, and a second handle (not shown) installed at the frame 301 for moving the movable plate 353.

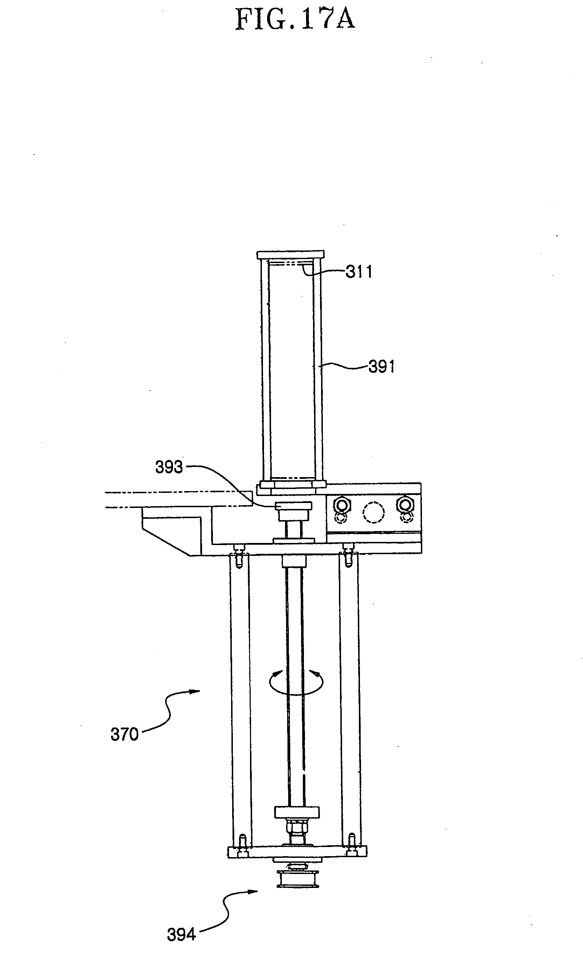

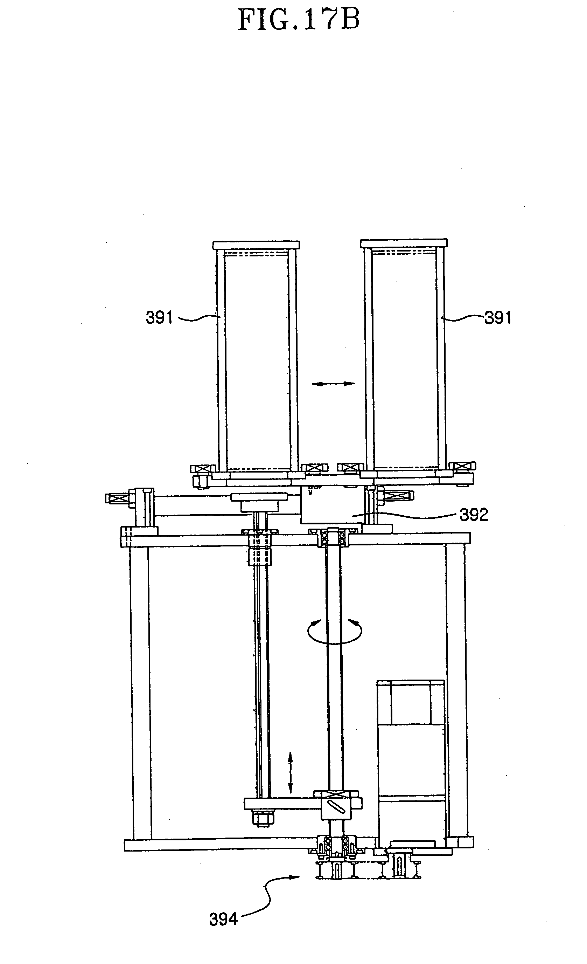

As shown in FIG. 17A and 17B, the tray unit 370 comprises a tray moving member 392 installed to be movable with respect to the frame 301 so as to utilize a pair of trays 391 alternately, a receiving pad 393 for receiving a piece of separator 311 unloaded to any one of the inner spaces of the trays 391, a receiving-pad moving member 394 installed at the frame 301 to be movable vertically so that the position of the receiving pad 393 can be adjusted according to the number of the pieces of separator 311 accumulated on the receiving pad 393.

The operation of the automated manufacturing system of a lithium secondary battery configured as above according to a preferred embodiment of the present invention will be described.

First, the power of the system 300 is turned on, and data required for the control unit is set. Then, the separator 311 wound around the separator roller 315 is drawn from the supply unit 310, is caused to position along the travel path 313 of the separator 311 in the adhesive applying unit 320 and the lamination unit 330, and is inserted into a gap between the conveyor members 343. These procedures can be performed after the operation mode of the control unit is changed into a manual mode so that the individual components can be moved manually or the gap between the components can be widened. Thereafter, positive electrode plates 102 and negative electrode plates 104 are stored in the positive-electrode-plate magazine 116 and the negative-electrode-plate magazine 118 of the lamination unit 330. In addition, quantity of adhesive required for the adhesive applying unit 320, the air system, and the like are checked. Whether or not all the components of the system 300 have been prepared for a normal operation can be confirmed in advance by changing the operation mode of the control unit into a warming-up mode.

Subsequently, when a start button of the control unit is pressed, the conveyor members 343 of the transporting unit 340 circulate. Then, the separator 311 interposed between the pair of conveyor members 343 is drawn to the tray unit 370, and, during this process, while the separator 311 wound around the separator roller 315 is guided by the guide rollers 317 of the supply unit 310, and the tension of the separator 311 is adjusted by the dancing roller 319, the separator 311 enters the adhesive applying unit 320. Thereafter, while the separator 311 passes through the adhesive applying unit 320, adhesive is applied to both surfaces of the separator 311 by the nozzles of the air injectors 325 to form a predetermined adhesive pattern. The adhesive applied to the separator 311 is dried by dry air injected by the adhesive drying members 329. In addition, the separator 311 is stopped at a predetermined position of the lamination unit 330 while being guided by the travel guide member 322.

Subsequently, in a state that the separator 311 is stopped at the lamination unit 330, the control unit causes the stacking member 110 of the lamination unit 330 to operate. Then, the positive-electrode-plate pressing plates 106 and the negative-electrode-plate pressing plates 108 are moved toward the positive electrode plates 102 and the negative electrode plates 104, respectively, to press the electrode plates 102 and 104. Meanwhile, the positive-electrode-plate pivoting members 122 and the negative-electrode-plate pivoting members 124 are pivoted by an angle of 90° from a state in which the positive-electrode-plate pivoting members 122 and the negative-electrode-plate pivoting members 124 face the travel path 313 so as to face the positive-electrode-plate magazine 116 and the negative-electrode-plate magazine 118, respectively. In addition, the positive-electrode-plate pushing members 132 and the negative-electrode-plate pushing members 134 are moved toward the positive electrode plate 102 and the negative electrode plate 104, and hold a batch of positive electrode plates 102 and negative electrode plates 104 which are stored in the positive-electrode-plate magazine 116 and the negative-electrode-plate magazine 118 by using respective suction or vacuum forces.

Thereafter, after the pushing members 132 and 134 have held the respective electrode plates 102 and 104, the pressing forces applied to the positive-electrode-plate pressing plates 106 and the negative-electrode-plate pressing plates 108 are released, and the positive-electrode-plate pivoting members 122 and the negative-electrode-plate pivoting members 124 are pivoted, in reverse directions, to face the travel path 313. Thereafter, the positive-electrode-plate pushing members 132 and the negative-electrode-plate pushing members 134 press the respective positive electrode plates 102 and the respective negative electrode plates 104 to both surfaces of the separator 311 positioned along the travel path 313, simultaneously. Then, the positive electrode plates 102 and the negative electrode plates 104 are attached to both surfaces of the separator 311 by respective adhesion forces of the adhesive applied to both surfaces of the separator 311, and, at the same time, the suction forces applied to the positive-electrode-plate pushing members 132 and the negative-electrode-plate pushing members 134 are released.

Thereafter, the separator 311 to which the positive electrode plates 102 and the negative electrode plates 104 have been attached are moved by the transporting unit 340, and, subsequently, a new batch of the separator 311 to which the adhesive has been applied is supplied to the lamination unit 330.

During these steps, the aligned state of the positive electrode plates 102 and the negative electrode plates 104 respectively stored in the positive-electrode-plate storing portions 112 and the negative-electrode-plate storing portions 114 may become improper due to pressing forces of the positive-electrode-plate pressing plates 106 and the negative-electrode-plate pressing plates 108 and pushing forces of the positive-electrode-plate pushing members 122 and the negative-electrode-plate pushing members 124. In this case, the positive-electrode-plate aligning member 142 and the negative-electrode-plate aligning member 144 are operated so that the positive electrode plates 102 and the negative electrode plates 104 positioned at the leading ends of the positive-electrode-plate magazine 116 and the negative-electrode-plate magazine 118 can be aligned by the positive-electrode-plate aligning bar 141 and the negative-electrode-plate aligning bar. In addition, a length of first one batch of the leading end portion of the separator 311 which have passed the transporting unit 340 must be cut away.

Thereafter, while the separator 311 passing through the leading ends of the conveyor members 343 of the transporting unit 340 is guided by the guiding jaw 218, the separator 311 begins to be supplied to the receiving rack 212 of the base member 210. In this step, the separator 311 is biassed toward the stopper member 230 by the air blowing force generated by the air nozzle 215 of the biassing member 213.

In this state, the folder plate 232 of the folder member 230 continuously presses the separator 311 supplied to the receiving space and biased by a predetermined times, and folds the separator 311 so that the sections of both sides of the separator 311 can have the shape of "Z", and the positive electrode plates 102 and the negative electrode plates 104 can alternate with each other. Then, the stopper member 220 is raised in a state that the folder plate 232 presses a piece of separator 311 against the receiving rack 212.

Subsequently, the clamp members 242 of the cutting/taping member 240 are caused to approach the both sides of the base member 210, and clamp both sides of the piece of separator 311 folded in the shape of "Z". Together with the clamping operation, the folder plate 232 is raised.

Thereafter, the clamp members 242 are operated to move the piece of separator 311 horizontally to a taping position. Subsequently, the tape supplying member 270 is operated to cause the leading end of the tape 262 to adhere to the upper surface of the piece of separator 311 positioned at the taping position. At the same time, the holder member 244 is raised to cause the holding roller 278 to contact the lower surface of the separator 311. Therefore, since the tape attaching rollers 272 and the holding roller 278 hold the separator 311, the separator 311 does not flutter.

Subsequently, the cutting member 250 is lowered to cut the leading end of a non-attached area of the piece of separator 311. Then, the heating cutter 258 heated to a predetermined temperature cuts the separator 311.

Thereafter, while the piece of separator 311 to which the leading end of the tape 262 is adhered is rotated at both ends thereof, the clamp rotating members 280 are operated to tape the piece of separator 311. Then, the finger members 245 are rotated by the stepping motors 282, and, at the same time, the tape 262 supplied from the tape supplying member 270 is naturally wound around the piece of separator 311 to tape the piece of separator 311.

Subsequently, the tape cutting member 290 is operated to cut the loose end of the tape 262 extended from the taped piece of separator 311. Then, the cutting wire 295 is moved to cut the tape 262 by using heat, and the packing operation is finally completed. Thereafter, after the first unloading air fingers 379 installed at the first unloading horizontal block 378 of the first unloading member 372 are passed the piece of separator 311 held by the finger members 245 of the of the clamp members 242, the first unloading air fingers 379 are moved horizontally and rotated vertically by an angle of 180°. Then, after the second unloading air fingers 387 of the unloading member 374 are passed the piece of separator 311 from the first air fingers 379, the second unloading air fingers 387 is moved vertically and, then, rotated vertically by an angle of 180°, and lay the piece of separator 311 on the tray 391. The second unloading member 374 is returned to its original position in reverse order to the above-described order.

During these operations, the transporting unit 240 is continuously supplying the separator 311 from the supply unit 310 to the adhesive applying unit 320, the adhesive applying unit 320 is applying the adhesive to another batch of separator 311, and the lamination unit 330 laminates the separator 311 with a batch of positive and negative electrode plates 102 and 104.

In addition, when the tray 391 of the tray unit 370 is full of pieces of separator 311, the tray 391 is separated from the tray unit 370, and the other vacant tray 391 disposed thereby is moved horizontally to an unloading position. Meanwhile, the tray 391 full of the pieces of separator 311 unloads the received pieces of separator 311 to a separate space, and the vacant tray 391 is positioned again at a spare position.

As described above, the automated manufacturing system of a lithium secondary battery according to the present invention has the following advantages.

First, the overall efficiency of production thereof can be enhanced due to the employment of the automated manufacturing system, and a rate of defective secondary batteries can be lowered.

Second, since the travel path of the separator is arranged to be horizontal, a row of positive electrode plates and a row of negative electrode plates, i.e., a batch of positive and negative electrode plates are attached and laminated to both surfaces of the separator at the same time, efficiency of the manufacturing operations and productivity of secondary batteries can be enhanced.

Third, in the adhesive applying unit 320, since a predetermined pattern of adhesive applied portions are formed by applying the printing principle of Ink-jet Marking, contact areas between a adhesive layer and an electrode plate and a thickness of the adhesive layer can be reduced, and, therefore, excessive use of adhesive can be prevented and the so-called string effect can be reduced, and, ultimately, electron (or ion) conductivity of the electrode plate can be enhanced. In addition, a quantity of adhesive being sprayed can be controlled with ease.

Fourth, since standardized, well-arranged magazines are employed, events in which electrode plates are inadequately aligned when the electrode plates are laminated to the separator can be prevented. Therefore, productivity of secondary batteries and quality thereof can be enhanced.

Fifth, since the separator both surfaces of which positive electrode plates and negative electrode plates are attached to, respectively, can be folded by serialized operations of the receiving rack, the stopper member, and the pressing plate so that both side sections of the folded separator can have the shape of "Z", productivity of secondary batteries can be enhanced markedly.

Sixth, since folded pieces of separator can be continuously moved, and taped by automated robot equipments, productivity of secondary batteries and efficiency of manufacturing processes can be enhanced.

While this invention has been particularly shown and described with reference to preferred embodiments thereof, it will be understood by those skilled in the art that various changes in form and details may be made therein without departing from the spirit and scope of the invention as defined by the appended claims.

## Claims

1. An automated manufacturing system for manufacturing a secondary lithium battery comprising:
a frame;
a supply unit having a separator roller arranged so that a separator can be released from the separator roller, and can travel along a separator travel path;
an adhesive applying unit disposed to have the separator travel path through the adhesive applying unit so as to apply adhesive to both surfaces of the separator in a predetermined pattern;
a lamination unit for laminating one adhesive applied surface of the separator with a plurality of positive electrode plates, and the other adhesive applied surface of the separator with a plurality of negative electrode plates simultaneously so that the electrode plates can correspond to the above pattern;
a transporting unit adapted so as to periodically cause the separator supplied from the supply unit to travel along the travel path at a predetermined speed via the adhesive applying unit and the lamination unit;
a packing unit for folding and packing a batch of the separator which is laminated with the electrode plates so that the positive electrode plates and the negative electrode plates can alternate with each other;
an unloading unit for unloading the packed separator to a tray unit.

2. An automated manufacturing system as claimed in claim 1, wherein the travel path between the supply unit and the packing unit is substantially horizontal.

3. An automated manufacturing system as claimed in claim 1 or claim 2, wherein the supply unit comprises:
a plurality of guide rollers positioned along the travel path; and
means for storing a predetermined length of separator released from the separator roller, and for supplying the separator to the adhesive applying unit while controlling the tension of the separator.

4. An automated manufacturing system as claimed in any previous claim, wherein the supply unit further comprises a stopper member for selectively stopping the separator travelling continuously.

5. An automated manufacturing system as claimed in any previous claim, wherein the adhesive applying unit comprises a pair of air injectors adapted so that the distance between the injectors and the travel path can be adjusted, and the injectors can face each other.

6. An automated manufacturing system as claimed in claim 5, wherein each air injector comprises a plurality of nozzles capable of injecting adhesive with compressed air so that a unit adhesive applied portion having a generally annular or doughnut shape can be formed on a surface of the separator.

7. An automated manufacturing system as claimed in any previous claim, wherein the adhesive applying unit further comprises adhesive drying members for drying the adhesive injected on both surfaces of the separator by the adhesive applying unit.

8. An automated manufacturing system as claimed in any previous claim, wherein the adhesive applying unit further comprises a first position adjusting member between the frame and the adhesive applying unit for adjusting the position of the adhesive applying unit with respect to the frame.

9. An automated manufacturing system as claimed in any previous claim, wherein the system further comprises a travel guide member between the adhesive applying unit and the lamination unit for guiding the separator travelling along the travel path.

10. An automated manufacturing system as claimed in any previous claim, wherein the lamination unit comprises:
a stacking member provided with a plurality of positive-electrode-plate storing portions each of which a multitude of positive electrode plates are stored in, and which are disposed equidistantly, and a plurality of negative-electrode-plate storing portions each of which a multitude of negative electrode plates are stored in, and which are disposed equidistantly, and are arranged to be asymmetrical to the positive-electrode-plate storing portions about the separator to which adhesive has been applied to in a predetermined pattern;
pairs of pivoting members adapted to pivot so as to face the positive-electrode-plate storing portions and the negative-electrode-plate storing portions, respectively; and
pushing members adapted to be linearly movable with respect to the respective pivoting members so as to approach the stacking member and the separator to attach the positive electrode plates and the negative electrode plates which are stored in the stacking member to the separator.

11. An automated manufacturing system as claimed in claim 10, wherein the stacking member further comprises pressing means for pressing the positive electrode plates and the negative electrode plates which are stored in the positive-electrode-plate storing portions and the negative-electrode-plate storing portions, respectively, against the respective pivoting members.

12. An automated manufacturing system as claimed in claim 11, wherein each of the pressing means comprises:
an elongated hole provided at each of the positive-electrode-plate storing portions and the negative-electrode-plate storing portions; and
a pressing plate which has a pressing projection to be inserted through the elongated hole, and is mounted to the frame to be linearly moved by a moving member.

13. An automated manufacturing system as claimed in claim 12, wherein each of the pressing means further comprises an elastic member mounted to the pressing projection so as to give an elastic force to corresponding one of the positive electrode plates and the negative electrode plates.

14. An automated manufacturing system as claimed in any one of claims 10 to 13, wherein each of the pushing members further comprises a cushion member which is provided with a passage communicating with a vacuum or suction member so as to hold a corresponding electrode plate stored in the stacking member with a vacuum or suction force.

15. An automated manufacturing system as claimed in any one of claims 10 to 14, wherein the lamination unit further comprises aligning members linearly movable with respect to the stacking member so as to align the positive electrode plates or the negative electrode plates stored in the stacking member.

16. An automated manufacturing system as claimed in any previous claim, wherein the transporting unit comprises a pair of conveyor members adapted so as to circulate while contacting the separator, and so as to allow the separator to pass through a gap therebetween.

17. An automated manufacturing system as claimed in claim 16, wherein the pair of conveyor members are arranged to be separated from one another when necessary.

18. An automated manufacturing system as claimed in any previous claim, wherein the packing unit comprises:
a base member which is provided with a receiving rack for receiving a batch of separator both surfaces of which are laminated with positive electrode plates and negative electrode plates in a predetermined pattern;
a stopper member movable so as to selectively approach one end of the base member for preventing the separator being supplied to the base member from being separated from the receiving rack;
a folder member movable with respect to the receiving rack so that the folder can press the separator supplied to a receiving space formed by the receiving rack and the stopper member for predetermined duration, and fold the separator so that both side sections of the folded separator can have generally the shape of "Z", and the positive electrode plates and the negative electrode plates can alternate with each other; and
a cutting/taping member for moving the folded separator to a predetermined area, cutting the separator at a non-electrode area to which no electrode plate is attached, and taping the folded and cut piece of separator.

19. An automated manufacturing system as claimed in claim 18, wherein the base member comprises:
a guiding jaw projected from a base plate to guide the separator supplied thereto; and
a pair of recessed portions recessed into both sides of the receiving rack.

20. An automated manufacturing system as claimed in claim 18 or claim 19, wherein the base member further comprises a biassing member for biassing the separator toward the stopper member so that the separator supplied to the receiving rack can be easily folded.

21. An automated manufacturing system as claimed in any one of claims 18 to 20, wherein the stopper member has a stopper fork for blocking both sides of the base member, and is linearly moved by a stopper moving member.

22. An automated manufacturing system as claimed in any one of claims 18 to 21, wherein the folder member comprises a folder plate moved by a folder moving member.

23. An automated manufacturing system as claimed in any one of claims 18 to 22, wherein the cutting/taping member comprises:
a pair of clamp members for approaching both sides of the base member, clamping both sides of a piece of folded separator, and moving the piece of separator to a taping position;
a cutting member for cutting the separator at the leading end of the base member after the separator has been moved by the clamp member;
a tape supplying member adapted to attach one end of tape to the piece of separator after a tape roller around which the tape is wound is moved along a tape travel path;
clamp rotating members for rotating the clamp members a predetermined number of times so that the piece of separator can be taped while the piece of separator to which one end of the tape is attached is rotated at both ends thereof; and
a tape cutting member for cutting the loose end portion of the tape extended from the packed piece of separator which has been rotated by the clamp rotating members and has been packed with the tape.

24. An automated manufacturing system as claimed in claim 23, wherein the cutting/taping member further comprises a holder member adapted to be raised and lowered so that the holder member can approach the tape supplying member and contact one surface of the separator to prevent the separator from fluttering before the separator is cut by the cutting member.

25. An automated manufacturing system as claimed in any previous claim, wherein the unloading unit comprises:
a first unloading member adapted to clamp the piece of separator packed at the packing unit, move linearly toward the tray unit, pivot by an angle of 180°, and move vertically; and
a second unloading member adapted to clamp the separator clamped by the first unloading member, and unload the separator to the tray unit by pivoting by an angle of 180° and moving vertically.

26. An automated manufacturing system as claimed in any previous claim, wherein the system further comprises a second position adjusting member for collectively adjusting the positions of the transporting unit, the packing unit and the unloading unit to correspond to the number of electrode plates to be laminated.

## Patentansprüche

1. Automatisches Herstellungssystem zur Herstellung einer Lithiumselculidärbatterie, das aufweist:
einen Rahmen;
eine Zuführeinheit, die eine Trennelementrolle aufweist, die so angeordnet ist, dass das Trennelement von der Trennelementrolle freigegeben werden kann und sich längs einer Trennelomentbewegungsbahn bewegen kann;
eine Klebstoffaufbringungseinheit, die so angeordnet ist, dass die Trennelementbewegungsbahn durch die Klebstoffaufbringungseinheit verläuft, um so Klebstoff auf beide Flächen des Trennelementes in einem vorgegebenen Muster aufzubringen;
eine Laminiereinheit für das Laminieren einer Fläche des Trennelementes, auf die Klebstoff aufgebracht wurde, mit einer Vielzahl von positiven Elektrodenplatten, und der anderen Fläche des Trennelementes, auf die Klebstoff aufgebracht wurde, mit einer Vielzahl von negativen Elcktrodenplatten gleichzeitig, so dass die Elektrodenplatten dem obigen Muster entsprechen können;
eine Transporteinheit, die so ausgeführt ist, dass sie periodisch veranlasst, dass das Trennelement von der Zuführeinheit zugeführt wird, um sich längs der Bewegungsbahn mit einer vorgegebenen Geschwindigkeit über die Klebstoffaufbringungseinheit und die Laminiereinheit zu bewegen
eine Packeinheit für das Falten und Packen einer bestimmten Menge des Trennelements, der mit Elektrodenplatten laminiert ist, so dass sich die positiven Elektrodenplatten und die negativen Elektrodenplatten einander abwechseln können;
eine Entladeeinheit für das Entladen des gepackten Trennelementes zu einer Ablageeinheit.

2. Automatisches Herstellungssystem nach Anspruch 1, bei dem die Bewegungsbahn zwischen der Zuführeinheit und der Packeinheit im Wesentlichen horizontal ist.

3. Automatisches Herstellungssystem nach Anspruch 1 oder Anspruch 2, bei dem die Zuführeinheit aufweist:
eine Vielzahl von Führungsrollen, die längs der Bewegungsbahn positioniert sind; und
ein Mittel für das Aufbewahren einer vorgegebenen Länge des Trennelementes, das von der Trennelementrolle freigegeben wurde, und für das Zuführen des Trennelementes zur Klebstoffaufbringungseinheit, während die Zugspannung des Trennelementes gesteuert wird.

4. Automatisches Herstellungssystem nach einem der vorhergehenden Ansprüche bei dem die Zuführeinheit außerdem ein Anschlagelement für das selektive Stoppen der kontinuierlichen Bewegung des Trennelementes aufweist.

5. Automatisches Herstellungssystem nach einem der vorhergehenden Ansprüche, bei dem die Klebstoffaufbringungseinheit ein Paar Lufteinspritzeinrichtungen aufweist, die so ausgeführt sind, dass der Abstand zwischen den Einspritzeinrichtungen und der Bewegungsbahn eingestellt werden kann und die Einspritzeinrichtungen einander gegenüberliegen können.

6. Automatisches Herstellungssystem nach Anspruch 5, bei dem jede Lufteinspritzeinrichtung eine Vielzahl von Düsen aufweist, die Klebstoff mit Druckluft einspritzen können, so dass ein einzelner Abschnitt, auf den ein Klebstoff aufgebracht wurde, mit einer im Allgemeinen ringförmigen oder pfannkuchenartigen Form auf einer Fläche des Trennelementes gebildet werden kann.

7. Automatisches Herstellungssystem nach einem der vorhergehenden Ansprüche, bei dem die Klebstoffaufbringungseinheit außerdem Klebstofftrockenelemente für das Trocknen des Klebstoffes aufweist, der auf beide Flächen des Trennelementes mittels der Klebstoffaufbringungseinheit gespritzt wurde.

8. Automatisches Herstellungssystem nach einem der vorhergehenden Ansprüche, bei dem die Klebstoffaufbringungseinheit außerdem ein erstes Positionseinstellelement zwischen dem Rahmen und der Klebstoffaufbringungseinheit für das Einstellen der Position der Klebstoffaufbringungseinheit mit Bezugnahme auf den Rahmen aufweist.

9. Automatisches Herstellungssystem nach einem der vorhergehenden Ansprüche bei dem das System außerdem ein Bewegungsführungselement zwischen der Klebstoffaufbrigungseinheit und der Laminiereinheit für das Führen des Trennelementes aufweist, das sich längs der Bewegungsbahn bewegt.

10. Automatisches Herstellungssystem nach einem der vorhergehenden Ansprüche, bei dem die Laminiereinheit aufweist:
ein Stapelelement, das mit einer Vielzahl von Abschnitten für das Aufbewahren positiver Elektrodenplatten, in denen jeweils eine Vielzahl von positiven Elektrodenplatten aufbewahrt wird, und die abstandsgleich angeordnet sind, und einer Vielzahl von Abschnitten für das Aufbewahren negativer Elektrodenplatten versehen ist, in denen jeweils eine Vielzahl von negativen Elektrodenplatten aufbewahrt wird, und die abstandsgleich angeordnet sind, und die so angeordnet sind, dass sie asymmetrisch zu den Abschnitten für das Aufbewahren positiver Elektrodenplatten um das Trennelement sind, auf das der Klebstoff in einem vorgegebenen Muster aufgebracht wurde;
Paare von Drehelementen, die so ausgeführt sind, dass sie sich so drehen, dass sie jeweils zu den Abschnitten für das Aufbewahren positiver Elektrodenplatten und den Abschnitten für das Aufbewahren negativer Elektrodenplatten hin liegen; und Druckelemente, die so ausgeführt sind, dass sie mit Bezugnahme auf die jeweiligen Drehelemente linear beweglich sind, um sich so dem Stapelelement und dem Trennelement zu nähern, um die positiven Elektrodenplatten und die negativen Elektrodenplatten, die im Stapelelement aufbewahrt werden, am Trennelement zu befestigen.

11. Automatisches Herstellungssystem nach Anspruch 10, bei dem das Stapelelement außerdem ein Pressmittel für das Pressen der positiven Elektrodenplatten und der negativen Elektrodenplaten, die jeweils in den Abschnitten für das Aufbewahren positiver Elektrodenplatten und den Abschnitten für das Aufbewahren negativer Elektrodenplatten aufbewahrt werden, gegen die jeweiligen Drehelemente aufweist.

12. Automatisches Herstellungssystem nach Anspruch 11, bei dem ein jedes der Pressmittel aufweist:
ein längliches Loch, das in jedem der Abschnitte für das Aufbewahren positiver Elektrodenplatten und der Abschnitte für das Aufbewahren negativer Elektrodenplatten vorhanden ist; und
eine Pressplatte, die einen Pressvorsprung aufweist, der durch das längliche Loch eingesetzt werden soll und am Rahmen montiert wird, um linear mittels eines Bewegungselementes bewegt zu werden.

13. Automatisches Herstellungssystem nach Anspruch 12, bei dem ein jedes der Pressmittel außerdem ein elastisches Element aufweist, das am Pressvorsprung montiert ist, um so einer entsprechenden der positiven Elektrodenplatten und der negativen Elektrodenplatten eine elastische Kraft zu erteilen.

14. Automatisches Herstellungssystem nach einem der Ansprüche 10 bis 13, bei dem ein jedes der Druckelemente außerdem ein Polsterelement aufweist, das mit einem Durchgang versehen ist, der mit einem Vakuum oder Saugelement in Verbindung steht, um so eine entsprechende Elektrodenplatte mit einer Vakuum- oder Saugkraft im Stapelelement im aufbewahrten Zustand zu halten.

15. Automatisches Herstellungssystem nach einem der Ansprüche 10 bis 14, bei dem die Laminiereinheit außerdem Ausrichtungselemente aufweist, die mit Bezugnahme auf das Stapelelement linear beweglich sind, um so die positiven Elektrodenplatten oder die negativen Elektrodenplatten auszurichten, die im Stapelelement aufbewahrt werden.

16. Automatisches Herstellungssystem nach einem der vorhergehenden Ansprüche, bei dem die Transporteinheit ein Paar Förderelemente aufweiset, die so ausgeführt sind, dass sie im Umlauf sind, während das Trennelement berührt wird, und um so zu gestatten, dass das Trennelement durch einen Spalt dazwischen hindurchgeht.

17. Automatisches Herstellungssystem nach Anspruch 16, bei dem das Paar der Förderelemente so angeordnet ist, dass sie voneinander getrennt sind, wenn erforderlich.

18. Automatisches Herstellungssystem nach einem der vorhergehenden Ansprüche, bei dem die Packeinheit aufweist:
ein Basiselement, das mit einem Aufnahmegestell für das Aufnehmen einer bestimmten Menge des Trennelements versehen ist, von dem beide Flächen mit positiven Elektrodenplatten und negativen Elektrodenplatten in einem vorgegebenen Muster laminiert sind;
ein Anschlagelement, das beweglich ist, um sich so selektiv einem Ende des Basiselementes zu nähern, um zu verhindern, dass das dem Basiselement zugeführte Trennelement vom Aufnahmegestell getrennt wird;
ein Falteinrichtungselement, das mit Bezugnahme auf das Aufnahmegestell beweglich ist, so dass die Falteinrichtung das Trennelement, das einem Aufnahmeraum zugeführt wird, der durch das Aufnahmegestell und das Anschlagelement gebildet wird, über eine vorgegebene Dauer pressen kann und das Trennelement so faltet, dass beide Seitenabschnitte des gefalteten Trennelementes im Allgemeinen die Form eines "Z" aufweisen können und sich die positiven Elektrodenplatten und die negativen Elektrodenplatten einander abwechseln können; und
ein Schneid/Bandwickelelement für das Bewegen des gefalteten Trennelementes zu einem vorgegebenen Bereich, Schneiden des Trennelementes in einem Nichtelektrodenbereich, an dem keine Elektrodenplatte befestigt ist, und Bandwickeln des gefalteten und geschnittenen Trennelemntteils.

19. Automatisches Herstellungssystem nach Anspruch 18, bei dem das Basiselement aufweist:
eine Führungsklemmbacke, die aus einer Basisplatte vorsteht, um das dazu zugeführte Trennelement zu führen; und ein Paar ausgesparte Abschnitte, die in beiden Seiten des Aufnahmegestells ausgespart sind.

20. Automatisches Herstellungssystem nach Anspruch 18 oder Anspruch 19, bei dem das Basiselement außerdem ein Vorspannelement für das Vorspannen des Trennelementes in Richtung des Anschlagelementes aufweist, so dass das dem Aufnahmegestell zugeführte Trennelement leicht gefaltet werden kann.

21. Automatisches Herstellungssystem nach einem der Ansprüche 18 bis 20, bei dem das Anschlagelement eine Anschlaggabel für das Blockieren beider Seiten des Basiselements aufweist und linear durch ein Anschlagbewegungselement bewegt wird.

22. Automatisches Herstellungssystem nach einem der Ansprüche 18 bis 21, bei dem das Falteinrichtungselement eine Falteinrichtungsplatte aufweist, die mittels eines Falteinrichtungsbewegungselementes bewegt wird.

23. Automatisches Herstellungssystem nach einem der Ansprüche 18 bis 22, bei dem das SchneidBandwickelelement aufweist:
ein Paar Klemmelemente für das Annähern beider Seiten des Basiselementes, wobei beide Seiten eines gefalteten Trennelementteils festgeklemmt und das Trennelementteil zu einer Bandwickelposition bewegt wird;
ein Schneidelement für das Schneiden des Trennelementes am vorderen Ende des Basiselementes, nachdem das Trennelement durch das Klemmelement bewegt wurde;
ein Bandzuführelement, das ausgeführt ist, um ein Ende des Bandes am Trennelementteil zu befestigen, nachdem eine Bandrolle, um die das Band gewickelt ist, längs einer Bandbewegungsbahn bewegt wird;
Klemmdrehelemente für das Drehen der Klemmelemente mehrmals, wie es vorgegeben wird, so dass das Trennelementteil mit Band bewickelt werden kann, während das Trennelementteil, an dem ein Ende des Bandes befestigt ist, an beiden Enden davon gedreht wird; und
ein Bandschneidelement für das Schneiden des losen Endabschnittes des Bandes, das sich vom gepackten Trennelementteil erstreckt, das mittels der Klemmdrehelemente gedreht und mit dem Band gepackt wurde.

24. Automatisches Herstellungssystem nach Anspruch 23, bei dem das Schneid/Bandwickelelement außerdern ein Halterelement aufweist, so ausgeführt, dass es angehoben und abgesenkt wird, so dass sich das Halterelement dem Bandzuführelement nähern und eine Fläche des Trennelementes berühren kann, um zu verhindern, dass das Trennelement flattert, bevor das Trennelement durch das Schneidelement geschnitten wird.

25. Automatisches Herstellungssystem nach einem der vorhergehenden Ansprüche, bei dem die Entladeeinheit aufweist:
ein erstes Entladeelement, ausgeführt, um das Trennelementteil, das in der Packeinheit gepackt wurde, festzuklemmen, linear in Richtung der Ablageeinheit zu bewegen, um einen Winkel von 180° zu drehen und vertikal zu bewegen; und
ein zweites Entladeelement, ausgeführt, um das Trennelement festzuklemmen, das durch das erste Entladeelement festgeklemmt wird, und das Trennelement zur Ablageeinheit durch Drehen um einen Winkel von 180° und vertikales Bewegen zu entladen.

26. Automatisches Herstellungssystem nach einem der vorhergehenden Ansprüche bei dem das System außerdem ein zweites Positionseinstellelement für das gemeinsame Einstellen der Positionen der Transporteinheit, der Packeinheit und der Entladeeinheit aufweist, um der Anzahl der zu laminierenden Elektrodenplatten zu entsprechen

## Revendications

1. Système de fabrication automatisé pour fabriquer une batterie d'appoint au lithium, comprenant :
un cadre ;
une unité d'alimentation comportant un rouleau séparateur agencé de sorte qu'un séparateur peut être dégagé du rouleau séparateur et peut se déplacer le long d'un trajet de déplacement du séparateur ;
une unité d'application d'un adhésif, agencée de sorte que le trajet de déplacement du séparateur traverse l'unité d'application de l'adhésif, pour appliquer l'adhésif sur les deux surfaces du séparateur dans un motif prédéterminé ;
une unité de stratification pour appliquer par stratification sur une surface du séparateur sur laquelle a été appliqué de l'adhésif plusieurs plaques d'électrodes positives, et sur l'autre surface du séparateur sur laquelle a été appliquée de l'adhésif plusieurs plaques d'électrodes négatives, de manière simultanée, de sorte que les plaques d'électrode correspondent au motif ci-dessus ;
une unité de transport adaptée pour entraîner périodiquement le déplacement du séparateur amené à partir de l'unité d'alimentation le long du trajet de déplacement à une vitesse prédéterminée via l'unité d'application de l'adhésif et l'unité de stratification ;
une unité d'emballage pour plier et emballer un lot du séparateur comportant les plaques d'électrode appliquées par stratification, de sorte que les plaques d'électrodes positives et les plaques d'électrodes négatives peuvent être mutuellement alternées ;
une unité de déchargement pour décharger le séparateur emballé sur une unité de plateau.

2. Système de fabrication automatisé selon la revendication 1, dans lequel le trajet de déplacement entre l'unité d'alimentation et l'unité d'emballage est pratiquement horizontal.

3. Système de fabrication automatisé selon les revendications 1 ou 2, dans lequel l'unité d'alimentation comprend :
plusieurs rouleaux de guidage positionnés le long du trajet de déplacement ; et
un moyen pour stocker une longueur prédéterminée du séparateur dégagée du rouleau séparateur et pour amener le séparateur vers l'unité d'application de l'adhésif tout en contrôlant la tension du séparateur.

4. Système de fabrication automatisé selon l'une quelconque des revendications précédentes, dans lequel l'unité d'alimentation comprend en outre un élément d'arrêt pour arrêter sélectivement le séparateur se déplaçant de manière continue.

5. Système de fabrication automatisé selon l'une quelconque des revendications précédentes, dans lequel l'unité d'application de l'adhésif comprend une paire d'injecteurs d'air adaptés de sorte que la distance entre les injecteurs et le trajet de déplacement peut être ajustée et que les injecteurs peuvent se faire face.

6. Système de fabrication automatisé selon la revendication 5, dans lequel chaque injecteur d'air comprend plusieurs buses capables d'injecter un adhésif avec de l'air comprimé, de sorte à former une partie unitaire sur laquelle un adhésif a été appliqué ayant une forme généralement annulaire ou torique sur une surface du séparateur.

7. Système de fabrication automatisé selon l'une quelconque des revendications précédentes, dans lequel l'unité d'application de l'adhésif comprend en outre des éléments de séchage de l'adhésif pour sécher l'adhésif injecté sur les deux surfaces du séparateur par l'unité d'application de l'adhésif.

8. Système de fabrication automatisé selon l'une quelconque des revendications précédentes, dans lequel l'unité d'application de l'adhésif comprend en outre un premier élément d'ajustement de la position entre le cadre et l'unité d'application de l'adhésif pour ajuster la position de l'unité d'application de l'adhésif par rapport au cadre.

9. Système de fabrication automatisé selon l'une quelconque des revendications précédentes, dans lequel le système comprend en outre un élément de guidage du déplacement entre l'unité d'application de l'adhésif et l'unité de stratification pour guider le séparateur se déplaçant le long du trajet de déplacement.

10. Système de fabrication automatisé selon l'une quelconque des revendications précédentes, dans lequel l'unité de stratification comprend :
un élément d'empilage comportant plusieurs parties de stockage de plaques d'électrodes positives, dans chacune desquelles sont stockées de multiples plaques d'électrodes positives, agencées de manière équidistante, et plusieurs parties de stockage de plaques d'électrodes négatives, dans chacune desquelles sont stockées de multiples plaques d'électrodes négatives, positionnées de manière équidistante, et agencées de sorte à être asymétriques par rapport aux parties de stockage des plaques d'électrodes positives autour du séparateur, sur lequel l'adhésif a été appliqué dans un motif prédéterminé ;
des paires d'éléments pivotants adaptés pour pivoter de sorte à faire respectivement face aux parties de stockage des plaques d'électrodes positives et aux parties de stockage des plaques d'électrode négatives ; et des éléments de poussée adaptés pour être déplacés de manière linéaire par rapport aux éléments pivotants respectifs de sorte à se rapprocher de l'élément d'empilage et du séparateur pour fixer les plaques d'électrodes positives et les plaques d'électrodes négatives stockées dans l'élément d'empilage sur le séparateur.

11. Système de fabrication automatisé selon la revendication 10, dans lequel l'élément d'empilage comprend en outre des moyens de pression pour presser les plaques d'électrodes positives et les plaques d'électrodes négatives, stockées respectivement dans les parties de stockage des plaques d'électrodes positives et les parties de stockage des plaques d'électrodes négatives contre les éléments pivotants respectifs.

12. Système de fabrication automatisé selon la revendication 11, dans lequel chacun des moyens de pression comprend :
un trou allongé formé au niveau de chacune des parties de stockage des plaques d'électrodes positives et des parties de stockage des plaques d'électrodes négatives ; et
une plaque de pression comportant une saillie de pression destinée à être insérée à travers le trou allongé, et montée sur le cadre en vue d'un déplacement linéaire par un élément de déplacement.

13. Système de fabrication automatisé selon la revendication 12, dans lequel chacun des moyens de pression comprend en outre un élément élastique monté sur la saillie de pression de sorte à appliquer une force élastique à une plaque correspondante des plaques d'électrodes positives et des plaques d'électrodes négatives.

14. Système de fabrication automatisé selon l'une quelconque des revendications 10 à 3, dans lequel chacun des éléments de poussée comprend en outre un élément amortisseur comportant un passage communiquant avec un élément à vide ou un élément d'aspiration, de sorte à retenir une plaque d'électrode correspondante stockée dans l'élément d'empilage par un vide ou une force d'aspiration.

15. Système de fabrication automatisé selon l'une quelconque des revendications 10 à 14, dans lequel l'unité de stratification comprend en outre des éléments d'alignement pouvant être déplacés de manière linéaire par rapport à l'élément d'empilage de sorte à aligner les plaques d'électrodes positives ou les plaques d'électrodes négatives dans l'élément d'empilage.

16. Système de fabrication automatisé selon l'une quelconque des revendications précédentes, dans lequel l'unité de transport comprend une paire d'éléments de transport adaptés pour circuler tout en contactant le séparateur, de sorte à permettre le passage du séparateur à travers un espace entre eux.

17. Système de fabrication automatisé selon la revendication 16, dans lequel la paire d'éléments de transport est agencée de sorte à ce qu'ils puissent être séparés l'un de l'autre si nécessaire.

18. Système de fabrication automatisé selon l'une quelconque des revendications précédentes, dans lequel l'unité d'emballage comprend :
un élément de base comportant un bâti de réception pour recevoir un lot de séparateur, dont les deux surfaces comportent des plaques d'électrodes positives et des plaques d'électrodes négatives appliquées par stratification, dans un motif prédéterminé ;
un élément d'arrêt pouvant être déplacé de sorte à se rapprocher sélectivement d'une extrémité de l'élément de base pour empêcher une séparation du séparateur amené vers l'élément de base du bâti de réception ;
un élément de pliage pouvant être déplacé par rapport au bâti de réception, de sorte due l'élément de pliage peut exercer une pression sur le séparateur amené vers un espace de réception formé ar le bâti de réception et l'élément d'arrêt pendant une durée prédéterminée, et plier le séparateur, de sorte que les deux sections latérales du séparateur plié peuvent en général avoir une forme en « Z », les plaques d'électrodes positives et le plaques d'électrodes négatives pouvant être alternées ; et
un élément de coupe/d'attache par ruban pour déplacer le séparateur plié vers une zone prédéterminée, couper le séparateur au niveau d'une zone exempte d'électrodes, sur laquelle aucune plaque d'électrode n'est fixée, et attacher par ruban la pièce pliée et découpée du séparateur.

19. Système de fabrication automatisé selon la revendication 18, dans lequel l'élément de base comprend :
une mâchoire de guidage débordant de la plaque de base pour guider le séparateur qui y est amené ; et une paire de parties évidées, évidées dans les deux côtés du bâti de réception.

20. Système de fabrication automatisé selon les revendications 18 ou 19, dans lequel l'élément de base comprend en outre un élément poussoir pour pousser le séparateur vers l'élément d'arrêt, de sorte à permettre un pliage facile du séparateur amené vers le bâti de réception.

21. Système de fabrication automatisé selon l'une quelconque des revendications 18 à 20, dans lequel l'élément d'arrêt comporte une fourche d'arrêt pour bloquer les deux côtés de l'élément de ase, et est déplacé de manière linéaire par un élément de déplacement de l'élément d'arrêt.

22. Système de fabrication automatisé selon l'une quelconque des revendications 18 à 21, dans lequel l'élément de pliage comporte une plaque de pliage déplacée par un élément de déplacement de l'élément de pliage.

23. Système de fabrication automatisé selon l'une quelconque des revendications 18 à 22, dans lequel l'élément de coupe/d'attache par ruban comprend:
une paire d'éléments de bride destinée à se rapprocher des deux côtés de l'élément de base, à serrer les deux côtés d'une pièce du séparateur plié et à déplacer la pièce du séparateur vers une position d'attache par ruban ;
un élément de coupe pour découper le séparateur au niveau de j'extrémité avant de l'élément de base après le déplacement du séparateur par l'élément de bride ;
un élément d'alimentation du ruban adapté pour attacher une extrémité du ruban sur la pièce du séparateur après le déplacement d'un rouleau du ruban, autour duquel le ruban est enroulé, le long d'un trajet de déplacement du ruban ;
des éléments de brides rotatives pour faire tourner les éléments de bride un nombre prédéterminé de fois, de sorte que la pièce du séparateur peut être attachée par le ruban pendant que la pièce du séparateur, sur laquelle est fixée une extrémité du ruban, est tournée au niveau de ses deux extrémités ; et
un élément de coupe du ruban pour découper la partie d'extrémité relâchée du ruban s'étendant à partir de la pièce de séparateur emballée ayant été tournée par les éléments de bride rotatifs et ayant été emballée avec le ruban.

24. Système de fabrication automatisé selon la revendication 23, dans lequel l'élément de coupe/d'attache par ruban comprend en outre un élément de retenue adapté pour être soulevé et abaissé, de sorte que l'élément de retenue peut se rapprocher de l'élément d'alimentation du ruban et con acter une surface du séparateur pour empêcher un flottement du séparateur avant la découpe du séparateur par l'élément de coupe.

25. Système de fabrication automatisé selon l'une quelconque des revendications précédentes, dans lequel l'unité de déchargement comprend :
un premier élément de déchargement adapté pour serrer la pièce du séparateur emballé au niveau de l'unité d'emballage, pour se déplacer de manière linéaire vers l'unité de plateau, pour pivoter un angle de 180° et se déplacer verticalement ; et
un deuxième élément de déchargement adapté pour serrer le séparateur serré par le premier élément de déchargement et décharger le séparateur sur l'unité de plateau en pivotant à un angle d 180° et en se déplaçant verticalement.

26. Système de fabrication automatisé selon l'une quelconque des revendications précédentes, dans lequel le système comprend en outre un deuxième élément d'ajustement de la position pour a uster de manière collective les positions de l'unité de transport, de l'unité d'emballage et de l'unité de déchargement pour qu'elles correspondent au nombre de plaques d'électrodes devant être stratifiées.
